(19) Europäisches Patentamt
European Patent Office
Office européen des brevets

(11) **EP 3 163 771 A1**

(12) **EUROPEAN PATENT APPLICATION**

(43) Date of publication:
**03.05.2017 Bulletin 2017/18**

(51) Int Cl.:
*H04B 10/2507* (2013.01)     *H04L 27/26* (2006.01)

(21) Application number: **15306711.1**

(22) Date of filing: **26.10.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(71) Applicant: **ALCATEL LUCENT**<br>**92100 Boulogne-Billancourt (FR)** | (72) Inventors:<br>• **AREF, Vahid**<br>**70435 Stuttgart (DE)**<br>• **BÜLOW, Henning**<br>**70435 Stuttgart (DE)**<br><br>(74) Representative: **MERH-IP Matias Erny Reichl Hoffmann**<br>**Patentanwälte PartG mbB**<br>**Paul-Heyse-Strasse 29**<br>**80336 München (DE)** |

(54) **METHOD FOR NONLINEAR FOURIER ANALYSIS IN OPTICAL TRANSMISSION SYSTEMS**

(57)     This application relates to a method for generating a waveform in an optical transmission system having a nonlinear channel, wherein the waveform is generated based on at least one spectral modulation function depending on at least one spectral value. The method comprises: receiving the at least one spectral modulation function and the at least one corresponding spectral value, setting an initial spectral condition based on the at least one spectral modulation function, generating at least one initial spectral function based on the initial spectral condition and the at least one spectral value, generating at least one spectral function based on the at least one initial spectral function and the at least one spectral value and determining the at least one waveform based on the at least one spectral function. This application also relates to a method for detecting a waveform having a nonlinear spectrum received via a nonlinear channel, the method comprises receiving the waveform from the nonlinear channel, wherein the received waveform has associated at least one spectral modulation function of the nonlinear spectrum depending on at least one spectral value, generating, by sampling the waveform, a plurality of samples of the waveform, dividing the plurality of samples into a first sample portion and a second sample portion, computing a first spectral matrix in a forward sample direction for the first sample portion, computing a second spectral matrix in a backward sample direction for the second sample portion, and obtaining, based on the first spectral matrix and the second spectral matrix, the at least one spectral modulation function for the received waveform.

Fig. 1

**Description**

**Technical Field**

This application relates to transmitters and receivers for optical transmission systems using a nonlinear channel, particularly for modulation over nonlinear spectrum including nonlinear frequency division multiplexing (NFDM).

**Background**

It is well-known that Nonlinear Schrödinger equation (NLSE) characterizes the interplay between dispersion and Kerr nonlinearity in the transmission channel and that NLSE can be therefore used to model signal propagation in an optical fiber. To study how the optical fields propagate in an optical fiber according to NLSE, a suitable method called nonlinear Fourier transform (NFT) has been applied, which describes the optical fields by a nonlinear spectrum and results in a simple linear channel transfer function even for strongly nonlinear propagation along a fiber link. In particular, general principles for modulation over nonlinear spectrum including nonlinear frequency division multiplexing (NFDM) have been investigated and current promising experiments show a high potential of "Nonlinear Frequency Division Multiplexing (NFDM)" schemes to be the future of long-haul fiber optical transmission. In principle, a nonlinear-dispersive fiber is a favorable "linear" channel in nonlinear spectral domain. In an NFDM scheme, the information is modulated over nonlinear spectrum and is transformed to a waveform in time domain via Inverse Nonlinear Fourier Transform (INFT). The waveforms which are transformed nonlinearly in time domain have linear transformations in nonlinear Fourier spectrum. Therefore, the changes of waveforms can be easily tracked in nonlinear spectral domain, i.e. the distortion of the waveforms caused by both fiber nonlinearity and dispersion can be easily analyzed and compensated in spectral domain, which motivates to first modulate information in nonlinear spectrum and then to map, via INFT, the nonlinear spectrum to the corresponding optical fields in time domain. The optical fields are subsequently propagating in an optical fiber causing waveform distortion of the optical fields. The nonlinearly distorted waveforms can be successfully detected by a Nonlinear Fourier Transform (NFT) algorithm at a receiver from corresponding nonlinear spectrum. In the receiver, the information can be retrieved from the nonlinear spectrum of the received optical fields computed by NFT. The main reason of modulating information in nonlinear spectrum is that the equivalent channel in nonlinear spectral domain is linear and the information can be retrieved by applying linear filters/equalizers.

The nonlinear spectrum can be divided into two parts: the continuous spectrum, corresponding to the "dispersive" signal components, and the discrete spectrum, corresponding to the "solitonic" (non-dispersive) signal components. The discrete spectrum is characterized by ($\lambda_i$, $Q_d(\lambda_i)$) where $\lambda_i$ is an isolated "nonlinear frequency" in upper complex plane, i.e. the eigenvalue of Lax operator, and $Q_d(\lambda_i)$ is the discrete spectral modulation function at $\lambda_i$, i.e. the spectral amplitude at this eigenvalue. In general, INFT can be computed by solving a Riemann-Hilbert system of algebraic equations. However, the computational complexity of the method grows cubic in terms of the number of eigenvalues of discrete spectrum. For instance, if the discrete nonlinear spectrum comprises $N$ pairs: ($\lambda_i$, $Q_d(\lambda_i)$), i.e. there are $N$ non-zero eigenvalues (in the positive complex plane), one needs to inverse a matrix of size $N$ for each signal sample. Therefore, the complexity scales $O(N^{2.80})$ per sample. Alternatively, Darboux transform (DT) which has the complexity $O(N^2)$ can be used. In the currently known method based on Darboux transform, a multi-soliton signal can be generated from given eigenvalues $\lambda_i$ but it is not known how to design a signal if the desired spectral amplitudes $Q_d(\lambda_i)$ shall also be included. In particular, the method needs additional $2N$ initial parameters which determine the spectral amplitudes. It is not yet known how to choose these initial parameters for the desired spectral amplitudes.

Furthermore, the nonlinear Fourier transform is usually defined based on the Zakharov-Shabat system. Considering a pulse $q(t)$ with a finite pulse width, in practice, the pulse $q(t)$ can be represented by $N$ samples. At the receiver, the nonlinear spectrum can be numerically computed by numerical methods such as Forward discretization, Crank-Nicolson method, Layer-peeling method and Ablowitz-Ladick discretization. However, most of these methods converge slowly and show unacceptable numerical error in estimating discrete spectra when $N$ is not very large. A better estimation like Layer-peeling algorithm usually results in higher computational complexity.

Accordingly, there is a need for a nonlinear optical transmission system to efficiently generate and detect solitary waveforms for desired nonlinear spectrum with improved accuracy. In order to solve the aforementioned problems, the present application proposes a more stable and numerically more precise algorithm to be used in an optical transmitter and an optical receiver of a nonlinear optical transmission system.

**Summary**

In view of this need, the present document proposes methods and devices having the features of the respective independent claims for generating at least one waveform in an optical transmission system having a nonlinear-dispersive channel, where the at least one waveform is generated based on at least one spectral modulation function, each spectral modulation function depending on a spectral value, and for detecting at least one waveform having a nonlinear spectrum received via the nonlinear-dispersive channel in the optical transmission system.

An aspect of the disclosure relates to a waveform generating method. The method may comprise receiving the at least one spectral modulation function and the at least one corresponding spectral value. Data may be encoded onto the at least one spectral modulation function. The at least one spectral modulation function may comprise, for example, spectral amplitudes $Q_d(\lambda_i)$ of a discrete nonlinear spectrum of the waveform. The method may comprise setting at least one initial spectral condition, e.g. $B_i$, based on the at least one spectral modulation function and the at least one spectral value, e.g. $\lambda_i$. The method may comprise generating at least one initial spectral function based on the at least one initial spectral condition. In an embodiment, the at least one initial spectral function may be a vector function, e.g. $v_i^{(0)}$, or a scalar function, e.g. $\rho_i^{(0)}$. In particular, the at least one initial spectral condition may comprise, for example, a first initial parameter, e.g. $A_i$, and a second initial parameter, e.g. $B_i$. Preferably, the first initial parameter may comprise a constant value $c_i$. Furthermore, the second initial parameter may be proportional to the at least one spectral modulation function. For example, the second initial parameter may be set or computed based on a formula of

$$B_i = -c_i \frac{Q_d(\lambda_i)}{\lambda_i - \lambda_i^*} \prod_{k=1, k \neq i}^{N} \frac{\lambda_i - \lambda_k}{\lambda_i - \lambda_k^*}.$$

The method may further comprise generating at least one spectral function based on the at least one initial spectral function $v_i^{(0)}(t)$ or $\rho_i^{(0)}(t)$ and the at least one spectral value $\lambda_i$. For example, the at least one initial spectral function may be update based on the at least one spectral value. The method may further comprise determining the waveform based on the at least one spectral function. For example, the at least one waveform may be determined based on the at least one initial spectral function.

According to the disclosure, generating the at least one spectral function may comprise recursively updating a current spectral function based on the at least one spectral value and a previously generated spectral function. For example, the at least one spectral function may be obtained in response to updating the at least one initial spectral function and the at least one spectral function may be updated recursively based on the at least one spectral value. In an embodiment, the at least one spectral function may be a vector function, e.g. $v_k^{(i)}(t)$, or a scalar function, e.g. $\rho_k^{(i)}(t)$. Furthermore, determining the waveform may comprise recursively updating a current waveform based on a previously generated waveform, the at least one spectral function and the at least one spectral value. For example, the at least one waveform may be recursively updated based on the at least one updated spectral function. In embodiments, the at least one spectral function may be updated recursively until each of a plurality of spectral values has been considered. Moreover, the at least one waveform may be updated recursively until each of the spectral values has been considered. In a preferred embodiment, the step of updating the at least one spectral function or the at least one waveform may be based on Darboux transform.

According to the disclosure, the at least one spectral modulation function may comprise a discrete nonlinear spectrum of the at least one waveform. The discrete nonlinear spectrum may be encoded with data and may be given or predetermined according to a desired nonlinear spectrum. In embodiments, the at least one waveform may comprise a solitary waveform, e.g. a multi-soliton waveform. The at least one waveform may comprise a plurality of samples. The method may further comprise updating recursively the at least one waveform for the plurality of samples.

Configured as above, by setting appropriate initial spectral conditions, based on the at least one spectral modulation function, and generating at least one initial spectral function, based on the at least one initial spectral condition, the at least one waveform can be efficiently generated from the at least one spectral modulation function, i.e. the desired nonlinear discrete spectrum, thereby reducing the computational complexity for INFT.

Another aspect of the disclosure relates to a waveform detecting method. The method may comprise receiving the at least one waveform from the nonlinear channel. In particular, the at least one received waveform may have associated at least one spectral modulation function of the nonlinear spectrum depending on at least one spectral value. The method may comprise generating a plurality of samples of the at least one received waveform by sampling the at least one received waveform. In embodiments, the at least one received waveform may have a finite pulse width. In such embodiments, the method may further comprise truncating the at least one received waveform.

The method may further comprise dividing the plurality of samples of the at least one received waveform into a first sample portion and a second sample portion. In an embodiment, the first sample portion and the second sample portion may comprise a same number of samples. That is, the duration of the first sample portion may be equal to the duration of the second sample portion, which may correspond to one half of the pulse width of the at least one received waveform. However, other partitions of the waveform samples are possible. In another embodiment, dividing the plurality of samples of the received waveform into the first sample portion and the second sample portion may be based on a sample portion dividing ratio c. The sample portion dividing ratio c may be any arbitrary value between 0 and 1. Preferably, the sample portion dividing ratio may be chosen based on formula:

$$c = \arg \min_{t=T_0(2c-1)} |q(t)| \exp(2\eta|t|).$$

where $T_0$ represents the one half of the pulse width of the received waveform and $\eta$ represents the imaginary part of the at least one spectral value.

According to the disclosure, the method may further comprise computing a first spectral matrix in a forward sample direction, during the first sample portion of the at least one received waveform, and computing a second spectral matrix in a backward sample direction, during the second sample portion of the at least one received waveform. In a preferred embodiment, the first spectral matrix and the second spectral matrix may be computed based on Trapezoid Discretization method. In other embodiments, the computation of the first spectral matrix and the second spectral matrix may also be based on any integration based methods such as Crank-Nicolson algorithm or Ablowitz-Ladik discretization algorithm. Furthermore, the method may comprise obtaining the at least one spectral modulation function for the at least one received waveform based on the first spectral matrix and the second spectral matrix. In embodiments, the at least one received waveform may comprise a 2-solitonic pulse and the at least one spectral modulation function may comprise one or more spectral coefficients. In other words, the at least one spectral modulation function may be computed based on one or more spectral coefficients.

Furthermore, the steps of dividing the plurality of samples of the at least one received waveform into the first sample portion and the second sample portion, computing the first spectral matrix in the forward sample direction and the second spectral matrix in the backward sample direction and obtaining the at least one spectral modulation function for the at least one received waveform may be implemented for each spectral value, e.g. $\lambda_i$, to calculate/compute the corresponding spectral modulation function, e.g. $Q_d(\lambda_i)$. Accordingly, these aforementioned steps may be repeated until each spectral value has been considered.

Configured as above, by computing the nonlinear spectrum partly in forward direction and partly in backward direction, the numerical estimation of the nonlinear spectrum is improved, providing a more stable and more precise algorithm for NFT especially in case of low sampling rate. In other words, the proposed method enables a simple, robust and sufficiently precise NFT, thereby advantageously reducing computational time to allow parallel implementation in hardware, which is a potential candidate for the future NFDM optical systems. Another aspect of the disclosure relates to a transmitter. The transmitter may be configured to generate at least one waveform for transmission via a nonlinear channel. In particular, the at least one waveform may be generated based on at least one spectral modulation function depending on at least one spectral value. The transmitter may comprise an encoder and a processor. The encoder may be configured to encode data onto the at least one spectral modulation function. The processor may be coupled with the encoder and may be configured to receive the at least one spectral modulation function encoded with the data from the encoder and the at least one corresponding spectral value. The processor may be configured to set at least one initial spectral condition, for example, $B_i$, based on the at least one spectral modulation function, e.g. $Q_d(\lambda_i)$, and the at least one spectral value, e.g. $\lambda_i$. In particular, the at least one initial spectral condition may comprise, for example, a first initial parameter, e.g. $A_i$, and a second initial parameter, e.g. $B_i$. Preferably, the first initial parameter may comprise a constant value $c_i$. Furthermore, the second initial parameter may be proportional to the at least one spectral modulation function. For example, the second initial parameter may be set or computed based on a formula

$$B_i = -c_i \frac{Q_d(\lambda_i)}{\lambda_i - \lambda_i^*} \prod_{k=1, k \neq i}^{N} \frac{\lambda_i - \lambda_k}{\lambda_i - \lambda_k^*}.$$

According to the disclosure, the processor may be further configured to generate at least one initial spectral function based on the at least one initial spectral condition. In an embodiment, the at least one initial spectral function may be a vector function, e.g. $v_i^{(0)}$, or a scalar function, e.g. $\rho_i^{(0)}$. Furthermore, the processor may be configured to generate at least one spectral function based on the at least one initial spectral function and the at least one spectral value. For example, the at least one initial spectral function may be updated based on the at least one spectral value.

The processor may be configured to further determine the waveform based on the at least one spectral function. For example, the at least one waveform may be determined based on the at least one initial spectral function. In an embodiment, the at least one spectral function may be a vector function, e.g. $v_k^{(i)}(t)$, or a scalar function, e.g. $\rho_k^{(i)}(t)$.

The determined waveform(s) may then be transmitted via the nonlinear channel to a receiver to convey information in an optical transmission system.

Another aspect of the disclosure relates to a receiver. The receiver may be configured to detect at least one waveform having a nonlinear spectrum received via a nonlinear channel in an optical transmission system. In particular, the at least one received waveform may have associated at least one spectral modulation function of the nonlinear spectrum depending on at least one spectral value. The receiver may comprise a processor. The processor may be configured to generate a plurality of samples of the at least one received waveform by sampling the at least one received waveform. The processor may be configured to divide the plurality of samples of the at least one received waveform into a first sample portion and a second sample portion. In embodiments, the plurality of samples of the received waveform may be divided into the first sample portion and the second sample portion based on a sample portion dividing ratio c. In one embodiment, the sample portion dividing ratio c may be any arbitrary value between 0 and 1. In another embodiment, the sample portion dividing ratio may be chosen based on formula:

$$c = \arg \min_{t=T_0(2c-1)} |q(t)| \exp(2\eta|t|).$$

where $T_0$ represents the one half of the pulse width of the received waveform and $\eta$ represents the imaginary part of the at least one spectral value.

According to the disclosure, the processor may be further configured to compute a first spectral matrix in a forward sample direction during the first sample portion of the at least one received waveform and compute a second spectral matrix in a backward sample direction during the second sample portion of the at least one received waveform. Furthermore, the processor may be configured to obtain the at least one spectral modulation function for the at least one received waveform based on the first spectral matrix and the second spectral matrix.

Furthermore, dividing the plurality of samples of the at least one received waveform into the first sample portion and the second sample portion, computing the first spectral matrix in the forward sample direction and the second spectral matrix in the backward sample direction and obtaining the at least one spectral modulation function for the at least one received waveform may be implemented for each of the at least one spectral value, e.g. $\lambda_i$, to calculate/compute the corresponding spectral modulation function, e.g. $Q_d(\lambda_i)$, and may accordingly be repeated until each of the at least one spectral value has been considered.

The receiver may further comprise a decoder to decode data from the obtained at least one spectral modulation function $(Q_d(\lambda_i))$ for the received waveform $(R(t))$, thereby determining the information transmitted via the nonlinear channel.

Configured as above, the proposed transmitter and receiver are implemented with more stable and numerically more precise algorithms to efficiently generate and detect, with improved accuracy, solitary waveforms according to desired nonlinear spectrum for nonlinear optical transmission. In other words, the INFT and NFT computations become more efficient by using the proposed devices, thereby reducing the complexity of hardware implementations. Furthermore, improved robustness of the proposed devices is suitable for the future NFDM optical systems.

It will be appreciated that method steps and device features may be interchanged in many ways. In particular, the details of the disclosed device can be implemented as a method, as the skilled person will appreciate.

Brief Description of the Figures

Embodiments of the disclosure are explained below in an exemplary manner with reference to the accompanying drawings, wherein

Fig.1(a) schematically illustrates a coherent optical system model with modulating information over nonlinear spectrum;

Fig.1(b) schematically illustrates an equivalent linear channel model of a nonlinear optical transmission system of Fig. 1(a);

Fig. 1(c) schematically illustrates an example of a coherent transmitter used in the nonlinear optical transmission system of Fig. 1(a);

Fig. 1(d) schematically illustrates an example of a coherent receiver used in the nonlinear optical transmission system of Fig. 1(a);

Fig. 2 illustrates an example of the proposed method for generating time-domain waveform with INFT algorithm according to embodiments of the disclosure;

Fig. 3 illustrates an example of the proposed method for implementing the initialization step 203 of Fig. 2 according to embodiments of the disclosure;

Fig. 4 illustrates an example of the proposed method for implementing the signal update step 205 of Fig. 2 according to embodiments;

Fig. 5 illustrates an example of the proposed method for implementing the spectral function update step 206 of Fig. 2 according to embodiments;

Fig. 6 illustrates an example of the proposed method for detecting at least one received waveform with NFT algorithm according to embodiments;

Fig. 7(a) illustrates a comparison of the precision for numerical solutions with respect to x(t) = exp($t^2$/2) using different numerical methods;

Fig. 7(b) illustrates a comparison of the precision for numerical solutions with respect to $x(t) = \exp(\int \mathrm{sech}(t)dt)$ using different numerical methods;

Fig. 8(a) illustrates absolute value of samples of a 2-solitonic pulse $q(t_n)$ received via a nonlinear channel in an optical transmission system of Fig. 1(a) according to embodiments;

Fig. 8(b)-(d) illustrates a comparison of the precision for numerical estimation of $\psi(t_n;\lambda)$ using FB and AL discretization algorithm according to embodiments;

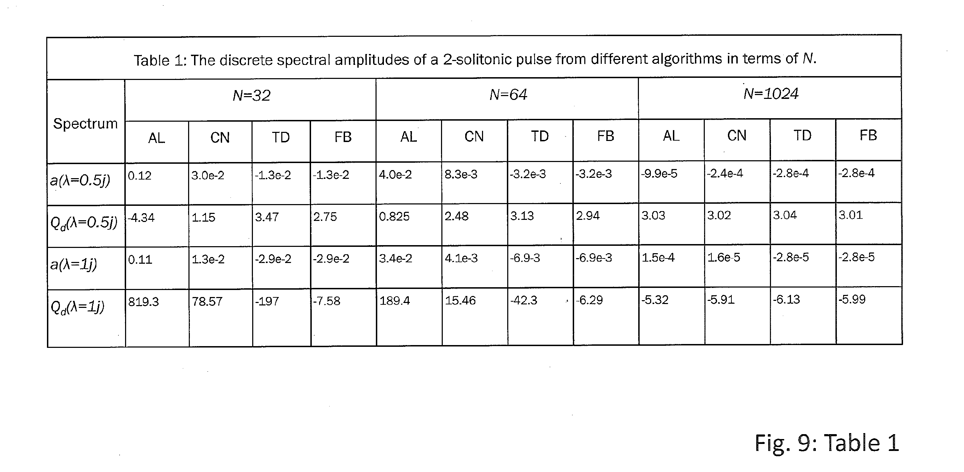

Fig. 9 shows Table 1 indicating discrete spectral amplitudes $Q_d(\lambda_i)$ and corresponding spectral coefficients $a(\lambda)$ computed by different algorithms;

Fig. 10 shows a first example algorithm for computing the inverse nonlinear Fourier transform based on the Darboux transform; and

Fig. 11 shows a second example algorithm for computing the inverse nonlinear Fourier transform based on the Darboux transform.

Detailed Description

This disclosure comprises providing an optical transmitter and an optical receiver of a nonlinear optical transmission system with a more stable and numerically more precise algorithm to efficiently generate and detect solitary waveforms for desired nonlinear spectrum with improved accuracy.

The nonlinear optical transmission system may be based on the system architecture proposed in the documents "V. Aref et.al., 'Experimental Demonstration of Nonlinear Frequency Division Multiplexed Transmission,' ECOC 2015", and "H. Bülow, 'Experimental Demonstration of Optical Signal Detection Using Nonlinear Fourier Transform,' JLT, vol. 33, no. 7, 2015" which are incorporated herein by reference in their entirety.

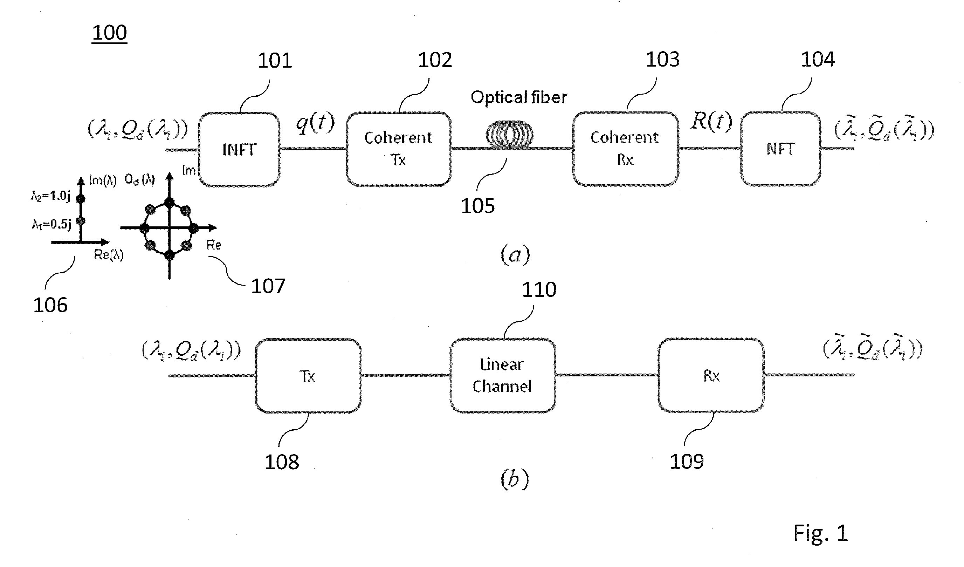

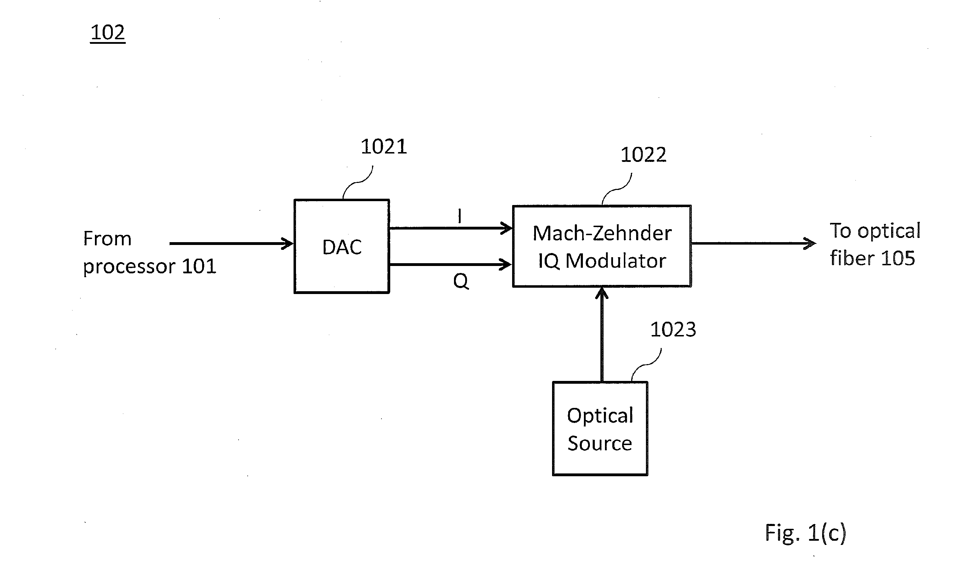

Fig.1(a) is a schematic illustration of coherent optical system model with modulating information over nonlinear spectrum. A nonlinear optical transmission system 100 comprises a coherent transmitter 102, a coherent receiver 103 and an optical fiber 105. The optical fiber 105 is preferably a nonlinear-dispersive fiber and may be implemented with single-mode fiber (SMF) or non-zero dispersion-shifted fiber (NZ-DSF) or other fiber types. The coherent transmitter 102, as illustrated in Fig. 1(c), comprises a digital-to-analog converter (DAC) 1021, an optical source 1023 and an electrical-to-optical converter 1022, e.g. a Mach-Zehnder IQ modulator. The nonlinear optical transmission system 100 further comprises a transmitter processor 101 and a receiver processor 104. Information (or data) is firstly encoded through, for example, an encoder (not shown) and then sent to the transmitter processor 101 to generate a time-domain signal based on the encoded information. The transmitter processor 101 is configured to generate at least one waveform in time domain q(t), e.g. soliton pulse(s), with an INFT algorithm such as Darboux Transform preferably. To achieve NFDM transmission in the nonlinear optical transmission system 100, information is encoded on nonlinear spectrum based on eigenvalue patterns $\lambda_i$ 106 and a spectral modulation function 107 comprising discrete nonlinear spectrum $Q_d(\lambda_i)$. In one example, NFDM transmission is demonstrated based on modulation of discrete spectrum by generating a constellation set from multiplexing two eigenvalues, $\lambda_1 = 0.5j$ and $\lambda_2 = 1j$, where $j = \sqrt{-1}$, according to the eigenvalue patterns 106. The spectral modulation function 107 of each eigenvalue forms a QPSK constellation. In the example, each 4 bits are mapped to a 2-soliton symbol of the constellation set. In particular, each 2 bits are mapped to one of the spectral modulation function 107 and the corresponding soliton signal $q(t)$ is then generated by the transmitter processor 101 with Darboux transform algorithm. Subsequently, the signal $q(t)$ is sent to the coherent transmitter 102 for generating the corresponding optical signal to be transmitted.

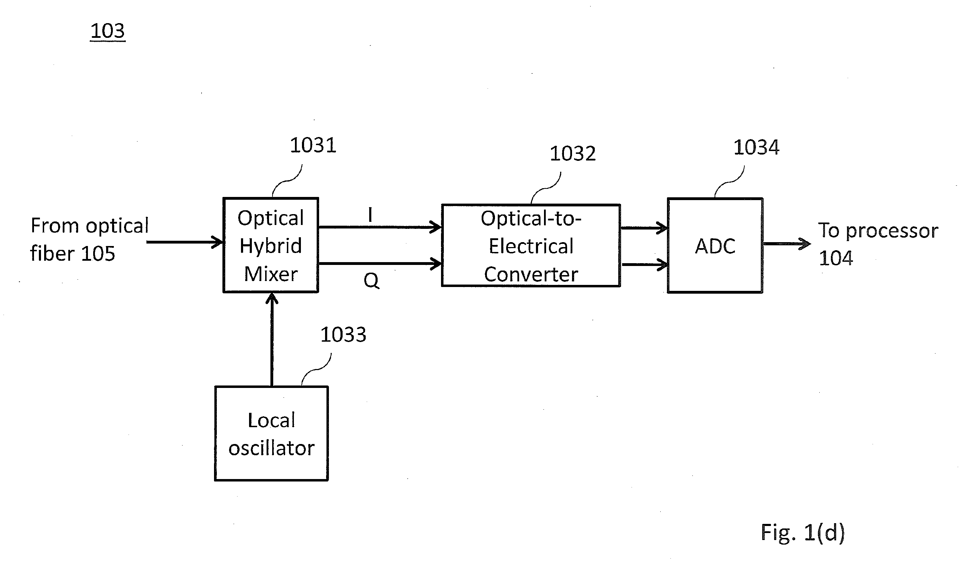

After transmission over the optical fiber 105, the optical signal becomes distorted and the coherent receiver 103 detects the distorted signal. It should be understood that the coherent receiver 103, as illustrated in Fig. 1(d), comprises an optical local oscillator 1033 and an optical hybrid mixer 1031 together with optical-to-electrical converters 1032 which convert the optical signal into the corresponding electrical signal. The converted distorted electrical signal in an analog form is sampled via an analog-to-digital converter (ADC) 1034 and processed by the receiver processor 104 that applies an NFT algorithm to recover both QPSK spectral phases of the distorted signal R(t). Since information is modulated in nonlinear spectrum, a nonlinear channel provided by the optical fiber 105 is equivalent to a linear channel in spectral domain and the information can be retrieved by applying linear filters/equalizers in the receiver processor 104. **Fig. 1(b)** shows the equivalent linear channel model of the nonlinear optical transmission system 100 in **Fig. 1(a),** indicating that the optical fiber 105 is equivalent to the linear channel 110 in spectral domain. Although it is shown in **Fig. 1(a)** that the transmitter processor 101 and the receiver processor 104 are placed outside the coherent transmitter 102 and the coherent receiver 103, it should be noted that they can be part of the coherent transmitter 108 and the coherent receiver 109, respectively, as illustrated in **Fig. 1(b).**

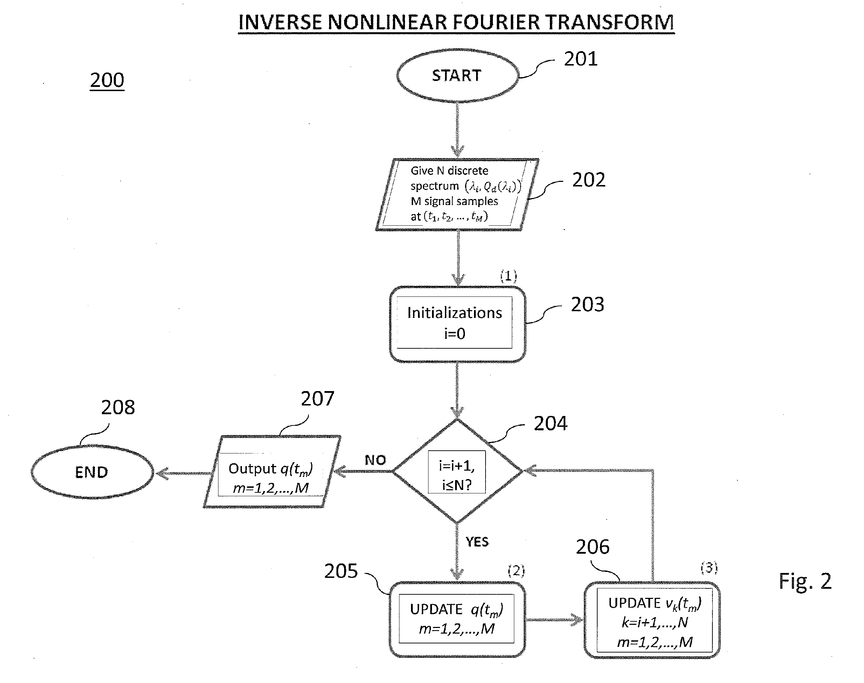

**Fig. 2** illustrates a method 200 comprising processing steps taken place in the transmitter processor 101 for generating a time-domain waveform with the INFT algorithm according to embodiments of the disclosure. In the embodiments, the INFT algorithm is configured to generate a multi-soliton waveform q(t) from discrete nonlinear spectrum pairs including spectral values and spectral modulation function, i.e. $(\lambda_i, Q_d(\lambda_i))$, based on Darboux transform. After starting the INFT algorithm at step 201, the method 200 comprises receiving at least one spectral modulation function and at least one corresponding spectral value at step 202 where N discrete spectrum pairs $(\lambda_i, Q_d(\lambda_i))$, i = 1, ..., N, and M signal samples at $(t_1, t_2, ..., t_M)$ are given, followed by an initialization step 203 which sets initial spectral conditions for the INFT algorithm (i = 0). The method 200 further comprises a signal update step 205 and a spectral function update step 206. The signal update step 205 updates the time-domain solitary waveform q(t) with spectral functions $v_k(t)$ which have been updated based on spectral values corresponding to eigenvalues $\lambda_i$ at the spectral function update step 206. In other words, at least one spectral function can be generated based on the at least one initial spectral function and the at least one spectral value at step 206 and the waveform can then be determined based on the at least one spectral function at step 205. In particular, the signal update step 205 and the spectral function update step 206 are implemented recursively adding a new spectral value corresponding to $\lambda_i$ to the current waveform. The method 200 therefore comprises determining, at step 204, whether each of the N spectral values $\lambda_i$ have been considered for the signal update step 205 and the spectral function update step 206. If each of the N spectral values $\lambda_i$ have been considered, the INFT algorithm outputs a final waveform having the N desired spectral values at step 207 and ends at step 208. Otherwise, the INFT algorithm will repeat the signal update step 205 and the spectral function update step 206 until each of the N spectral values $\lambda_i$ have been added to the time-domain solitary waveform q(t). It should be noted that the embodiment of Fig. 2 calculates the signal q(t) for every sample and the same procedure is also implemented for M signal samples at $(t_1, t_2, ..., t_M)$.

In the following, the principle of the proposed method generating the desirable solitary waveform is explained. Considering the Nonlinear Schrödiger (NLS) equation,

$$\frac{\partial}{\partial z}q(t, z) - \frac{\partial^2}{\partial t^2}q(t, z) = 2|q(t, z)|^2 q(t, z). \tag{1}$$

where z is the transmission distance. Nonlinear Fourier Transform (NFT) (or inverse scattering method) is an efficient way to solve this nonlinear differential equation or track the evolution of its solutions. NFT is a bijective mapping of a solution from time domain into a different domain, e.g. frequency/spectral domain, called nonlinear spectrum. The spectral components transform in z linearly. The inverse nonlinear Fourier transform (INFT) maps the spectral components to the corresponding solution in time domain. One can use Zakharov-Shabat system to characterize the nonlinear spectrum. The NLS equation is the compatibility condition of the following two linear equations:

$$\frac{\partial}{\partial t}v(t, z; q, \lambda) = \begin{pmatrix} -j\lambda & q(t, z) \\ -q^*(t, z) & j\lambda \end{pmatrix} v(t, z; q, \lambda),$$ (2)

$$\frac{\partial}{\partial z}v(t, z; q, \lambda) = \begin{pmatrix} 2j\lambda^2 - j|q(t, z)|^2 & -2\lambda q(t, z) - jq_t(t, z) \\ 2\lambda q^*(t, z) - jq_t^*(t, z) & -2j\lambda^2 + j|q|^2 \end{pmatrix} v(t, z; q, \lambda),$$ (3)

where $\lambda$ is the spectral parameter, $v(t,z; q,\lambda)$ is a $2 \times 1$ vector, $q_t$ denotes $\partial q/\partial t$ and $q^*$ denotes complex conjugate of $q$. It is understood that $j = \sqrt{-1}$ for representing complex numbers. By differentiating (2) and (3) with respect to $z$ and $t$, the right sides become equal if $q(t,z)$ satisfies the NLS equation (1) . In particular, this implies that the nonlinear Schrödinger equation possess a "hidden linearity" in the form of (2) and (3). The temporal linear operator (2) and the spatial linear operator (3) are called the Lax pair of (1).

Assuming that $|q(t,z)|$ vanishes sufficiently fast as $|t| \to \infty$, or $z \to \infty$, then, the following result is obtained:

$$\frac{\partial}{\partial t}v(t, z; q, \lambda) \xrightarrow[|t|\to\infty]{} \begin{pmatrix} -j\lambda & 0 \\ 0 & j\lambda \end{pmatrix} v(t, z; q, \lambda).$$

It is implied that $v(t, z; q, \lambda) \xrightarrow[|t|\to\infty]{} \left(c_1 e^{-j\lambda t}, c_2 e^{+j\lambda t}\right)^T$ for some constants $c_1, c_2 \in C$, i.e. a set of complex numbers. Similarly, $v(t, z; q, \lambda) \xrightarrow[z\to\infty]{} \left(z_1 e^{+j\lambda^2 z}, z_2 e^{-j\lambda^2 z}\right)^T$. Focusing on the temporal equation and reviewing some results, for presentation simplicity, dependency on $z$ is omitted. Considering $v(t;\lambda)$ as the elements of the vector space V equipped with the Wronskian product,

$$\mathcal{W}(v, u) = \det \begin{pmatrix} v_1 & u_1 \\ v_2 & u_2 \end{pmatrix} = v_1 u_2 - u_1 v_2.$$

the adjoint of any vector $v(t) \in V$ is defined as

$$\bar{v}(t) = \begin{pmatrix} v_2^* \\ -v_1^* \end{pmatrix}.$$

Here, the following properties are shown:

- $u(t; \mu) = v(t; \lambda = \mu^*)$ is a solution of (2) for $\lambda = \mu$ if $v(t; \mu^*)$ is its solution for $\lambda = \mu^*$.
- Let $v(t;\lambda)$ be a solution of (2). $W(\bar{v}, v) = |v_1|^2 + |v_2|^2 = c$ for some constant $c \in R$ independent of $t$.
- If $W(\bar{v},v) \neq 0$, then $\bar{v}(t;\lambda^*)$ and $v(t;\lambda)$ are linearly independent and hence, they form a basis for the solution subspace of $\lambda$.

Some initial conditions are required for determining a specific temporal solution. Assuming $\lambda \in C^+$, i.e. the eigenvalues are located on the upper complex plane, and defining $\phi^P(t;\lambda)$, $\overline{\phi}^P(t;\lambda^*)$, $\phi^N(t;\lambda)$ and $\overline{\phi}^N(t;\lambda^*)$ with the following boundary conditions:

$$\phi^{\mathrm{P}}(t;\lambda) \underset{t\to\infty}{\to} \begin{pmatrix} 0 \\ 1 \end{pmatrix} e^{j\lambda t}, \qquad\qquad \phi^{\mathrm{N}}(t;\lambda) \underset{t\to-\infty}{\to} \begin{pmatrix} 1 \\ 0 \end{pmatrix} e^{-j\lambda t}$$

$$\overline{\phi}^{\mathrm{P}}(t;\lambda^*) \underset{t\to\infty}{\to} \begin{pmatrix} 1 \\ 0 \end{pmatrix} e^{-j\lambda t}, \qquad\qquad \overline{\phi}^{\mathrm{N}}(t;\lambda^*) \underset{t\to-\infty}{\to} \begin{pmatrix} 0 \\ -1 \end{pmatrix} e^{j\lambda t}$$

one can see that $W(\phi^P(t;\lambda),\overline{\phi}^P(t;\lambda^*)) = -1$ and $W(\phi^N(t;\lambda),\overline{\phi}^N(t;\lambda^*)) = -1$. Therefore, both pairs of $(\phi^P(t;\lambda), \overline{\phi}^P(t;\lambda^*))$ and $(\phi^N(t;\lambda), \overline{\phi}^N(t;\lambda^*))$ can be used as a basis for the solutions of (2) for $\lambda$ and are called canonical solutions. Thus,

$$\left(\phi^{\mathrm{N}}(t;\lambda), \overline{\phi}^{\mathrm{N}}(t;\lambda^*)\right) = \left(\overline{\phi}^{\mathrm{P}}(t;\lambda^*), \phi^{\mathrm{P}}(t;\lambda)\right) \begin{pmatrix} a(\lambda) & b^*(\lambda^*) \\ b(\lambda) & -a^*(\lambda^*) \end{pmatrix}, \tag{4}$$

where $a(\lambda) = W(\phi^N(t;\lambda),\phi^P(t;\lambda))$ and $b(\lambda) = W(\overline{\phi}^P(t;\lambda^*),\phi^N(t;\lambda))$. Note that $a(\lambda)$ and $b(\lambda)$ are independent of $t$. The matrix

$$S = \begin{pmatrix} a(\lambda) & b^*(\lambda^*) \\ b(\lambda) & -a^*(\lambda^*) \end{pmatrix}$$

is called the scattering matrix and it captures the required information to identify $q(t)$. More precisely, at $t \to -\infty$, where $q(t)$ is absent, $\phi^N(t;\lambda) \to e^{-j\lambda t}(1,0)^T$. For any finite $t_0$, $\phi^N(t_0;\lambda)$ captures the information of $q(t)$, $t \in (-\infty, t_0)$ by integrating over $q(t)$ according to the temporal evolution. As a result, the signal $q(t)$ can be uniquely described by knowing $a(\lambda)$ and $b(\lambda)$ for some particular $\lambda \in C^+$.

If $q(t)$ decays faster than any polynomial, it is shown that $\phi^N(t;\lambda)e^{+j\lambda t}$ and $\phi^P(t;\lambda)e^{j\lambda t}$ are analytic in upper-half complex plane and consequently, $a(\lambda) = W(\phi^N(t;\lambda),\phi^P(t;\lambda))$ is analytic in the same domain. It implies that the zeros of $a(\lambda)$ are isolated. It is noted that $\phi^P(t;\lambda)e^{+j\lambda t}$ is only analytic in lower-half complex plane and therefore, $b(\lambda)$ is not analytic in general.

Moreover, the projection (4) is well-defined for $\lambda \in R$ as the canonical solutions are bounded. It has been explained that solutions for $\lambda^*$ can be constructed from the solutions for $\lambda$. Therefore, one needs to focus on upper or lower half of complex plane. For $\lambda \in C^+$, $\phi^N(t;\lambda)$ and $\overline{\phi}^P(t;\lambda^*)$ are unbounded as $t \to +\infty$. However, the projection (4) is still well-defined when $a(\lambda) = 0$. These $\lambda$ (and $\lambda^*$) are the eigenvalues of the corresponding spectral operator:

$$j \begin{pmatrix} \frac{\partial}{\partial t} & -q(t,z) \\ -q^*(t,z) & -\frac{\partial}{\partial t} \end{pmatrix} v = \lambda v. \tag{5}$$

This can be immediately derived from reordering the temporal equation (2). The Zakharov-Shabat system has two types of spectrum: the discrete spectrum and the continuous spectrum. The latter is defined as: $Q_c(\lambda) = \dfrac{b(\lambda)}{a(\lambda)}$ for $\lambda \in R$. The continuous spectrum corresponds to the dispersive part of signal $q(t)$. The discrete spectrum is defined over zeros of $a(\lambda)$: $Q_d(\lambda_i) = \frac{b(\lambda_i)}{a'(\lambda_i)}$, where $a'(\lambda_i) = \frac{d}{d\lambda} a(\lambda)\big|_{\lambda=\lambda_i}$ for all $\{\lambda_1, \cdots, \lambda_n\} \subset C^+\backslash R$ with the finite set satisfying $a(\lambda) = 0$.

The discrete spectrum corresponds to the solitonic part of signal q(t). Here, the spectral coefficients $a(\lambda)$ and $b(\lambda)$ are given by

$$a(\lambda) = \lim_{t \to +\infty} e^{+j\lambda t} \phi_1^{\mathrm{N}},$$

$$b(\lambda) = \lim_{t \to +\infty} e^{-j\lambda t} \phi_2^{\mathrm{N}} \tag{6}$$

The signal $q(t)$ can be characterized from $Q_c(\lambda)$, $\lambda \in R$ and the set of $(\lambda_i, Q_d(\lambda_i))$ using an inverse nonlinear Fourier transform such as Riemann-Hilbert method. On the other hand, the proposed algorithm based on the Darboux transformation is very useful when $q(t)$ has only a discrete spectrum.

The Darboux transform (DT) was first introduced in the context of Sturm-Liouville differential equations. Later, it was extended to nonlinear integrable systems, providing the possibility to construct from one solution of an integrable equation another solution. The proposed algorithm works based on the following theorem.

Theorem: Considering an absolutely integrable $q(t,z)$ with the scattering functions $a(\lambda)$ and $b(\lambda)$ at $z = 0$ and assuming that the nontrivial $(\psi_1(t,z), \psi_2(t,z))^T$ fulfills (2) and (3) for some $\lambda_0$ such that $(\lambda_0 - \lambda_0^*) > 0$ and $a(\lambda_0) \neq 0$ (it is not an eigenvalue), i.e.

$$\left(\frac{\partial}{\partial t}\psi_1(t,z), \frac{\partial}{\partial t}\psi_2(t,z)\right)^T = P(q(t,z),\lambda_0)(\psi_1(t,z),\psi_2(t,z))^T$$

$$\left(\frac{\partial}{\partial z}\psi_1(t,z), \frac{\partial}{\partial z}\psi_2(t,z)\right)^T = M(q(t,z),\lambda_0)(\psi_1(t,z),\psi_2(t,z))^T, \tag{7}$$

where $P(q(t,z),\lambda_0)$ and $M(q(t,z),\lambda_0)$ are given in (2) and (3), respectively. It is defined that $\Sigma = \Psi\Lambda_0\Psi^{-1}$, where

$$\Psi = \begin{pmatrix} \psi_1 & \psi_2^* \\ \psi_2 & -\psi_1^* \end{pmatrix}, \Lambda_0 = \begin{pmatrix} \lambda_0 & 0 \\ 0 & \lambda_0^* \end{pmatrix}.$$

Defining $\tilde{q}(t,z) = q(t,z) - 2j(\lambda_0 - \lambda_0^*)\frac{\psi_2^*(t,z)\psi_1(t,z)}{|\psi_1(t,z)|^2 + |\psi_2(t,z)|^2}$, it can thus be observed that,

(a) If $v(t,z; q,\mu)$ satisfies (2) and (3), then $u(t,z;\tilde{q},\mu) = (\mu I - \Sigma)v(t,z; q,\mu)$ satisfies (2) and (3) for $\tilde{q}(t, z)$ and spectral parameter $\mu$.

(b) Non-zero constants can be assumed, as $\lambda_0$ is not an eigenvalue of $q$:

$$\lim_{t \to +\infty} e^{j\lambda_0 t}\psi_1(t) = \psi_1^+, \lim_{t \to -\infty} e^{-j\lambda_0 t}\psi_2(t) = \psi_2^- \tag{8}$$

The discrete spectrum of $\tilde{q}(t, z)$ comprises the eigenvalues of $q(t,z)$ and also $\lambda_0$ (and $\lambda_0^*$), In the following, $\tilde{a}(\lambda)$ and $\tilde{b}(\lambda)$ are given to denote the scattering functions of $\tilde{q}(t) \equiv \tilde{q}(t, z = 0)$:

$$\tilde{a}(\lambda) = \frac{\lambda - \lambda_0}{\lambda - \lambda_0^*} a(\lambda), \text{for } \lambda \in \mathbb{C}^+,$$

$$\tilde{b}(\lambda) = b(\lambda) \text{ for } \lambda \in \mathbb{R} \cup \{\text{eigenvalues of } q(t,z=0)\},$$

$$\tilde{b}(\lambda_0) = -\frac{\psi_2^-}{\psi_1^+},$$

$$\widetilde{Q_c}(\lambda) = \frac{\lambda - \lambda_0^*}{\lambda - \lambda_0} Q_c(\lambda), \lambda \in \mathbb{R},$$

$$\widetilde{Q_d}(\lambda_i) = \frac{\lambda_i - \lambda_0^*}{\lambda_i - \lambda_0} Q_d(\lambda_i) \ for \ \lambda_i \in \{ \ eigenvalues \ of \ q(t, z = 0)\}$$

$$\widetilde{Q_d}(\lambda_0) = -\frac{\lambda_0 - \lambda_0^*}{a(\lambda_0)} \times \frac{\psi_2^-}{\psi_1^+}.$$

where $\widetilde{Q_c}(\lambda)$ and $\widetilde{Q_d}(\lambda_i)$ denote the continuous and discrete spectrum of $q(t)$ and $Q_c(\lambda)$ and $Q_d(\lambda_i)$ denote the continuous and discrete spectrum of $q(t) = q(t, z = 0)$.

From the theorem above, the initial conditions $(A_i, B_i)$ can be easily shown in the proposed method. The scattering functions of $q^{(i)}(t)$ can be represented by $(a^{(i)}(\lambda), b^{(i)}(\lambda))$ with $q^{(0)} = 0$, $a^{(0)} = 1$. Considering the recursion $i, i \geq 1$, the following equation can be observed:

$$\begin{pmatrix} \psi_1 \\ \psi_2 \end{pmatrix} = v_i^{(i-1)}(t) = (\lambda_i I - \Sigma_{i-1})(\lambda_i I - \Sigma_{i-2}) \cdots (\lambda_i I - \Sigma_1) \times \begin{pmatrix} A_i e^{-j\lambda_i t} \\ B_i e^{+j\lambda_i t} \end{pmatrix}.$$

Although $\Sigma_k$ depends on $v_k^{(k-1)}(t)$, its limits are only a function of $\lambda_k$, i.e.

$$\lim_{t \to -\infty} \Sigma_k = \begin{pmatrix} \lambda_k^* & 0 \\ 0 & \lambda_k \end{pmatrix}, \lim_{t \to +\infty} \Sigma_k = \begin{pmatrix} \lambda_k & 0 \\ 0 & \lambda_k^* \end{pmatrix}$$

It implies that $\psi_1^+ = \prod_{k=1}^{i-1}(\lambda_i - \lambda_k)A_i$, and $\psi_2^- = \prod_{k=1}^{i-1}(\lambda_i - \lambda_k)B_i$. They are finite non-zero values, and (b) of the above theorem can be applied. One can verify that $a^{(i)} = \prod_{k=1}^{i}\frac{\lambda - \lambda_k}{\lambda - \lambda_k^*}$ and $b^{(i)}(\lambda_i) = -\frac{\psi_2^-}{\psi_1^+} = -\frac{B_i}{A_i}$. At the end, $b^{(N)}(\lambda_i) = b^{(i)}(\lambda_i)$ ($b(\lambda)$ at eigenvalues does not change by applying the Darboux transform) and $a^{(N)} = \prod_{k=1}^{N}\frac{\lambda - \lambda_k}{\lambda - \lambda_k^*}$, implying that

$$Q_d(\lambda_i) = (\lambda_i - \lambda_i^*) \prod_{k=1, k \neq i}^{N} \frac{\lambda_i - \lambda_k^*}{\lambda_i - \lambda_k} \times \frac{-B_i}{A_i}.$$

If $A_i = 1$ is set, the desired $B_i$ can be obtained.

Therefore, considering the first order soliton with discrete spectrum

$$\left(\lambda = \frac{1}{2}\omega + \frac{j}{2}\sigma, Q_d(\lambda) = Ae^{j\theta}\right),$$

the proposed method leads to:

$$q(t) = -j\sigma \exp(-j\omega t - j\theta) \frac{2}{\frac{\sigma}{A}\exp(\sigma t) + \frac{A}{\sigma}\exp(-\sigma t)}$$

$$= -j\sigma \exp(-j\omega t - j\theta)\mathrm{sech}\left(\sigma t + \ln\left(\frac{\sigma}{A}\right)\right)$$

which is the closed-form equation for the first order solution.

According to the above disclosure, the initial spectral conditions may include two parameters, e.g. a first initial parameter $A_i$ and a second initial parameter $B_i$, where $A_i$ can be an arbitrary constant value. In general, $B_i$ depends on eigenvalues $\lambda_k$ and corresponding spectral amplitudes $Q_d(\lambda_k)$. For simplicity, $A_i$ is preferably set to 1 and $B_i$ can then be calculated based on the at least one spectral modulation function $Q_d(\lambda_i)$ through the formula $B_i = -\frac{Q_d(\lambda_i)}{\lambda_i - \lambda_i^*}\prod_{k=1,k\neq i}^{N}\frac{\lambda_i - \lambda_k}{\lambda_i - \lambda_k^*}$. It is further noted that $B_i$ is proportional to the spectral modulation functions $Q_d(\lambda_i)$, even though $B_i$ may be adapted accordingly in case that $A_i \neq 1$.

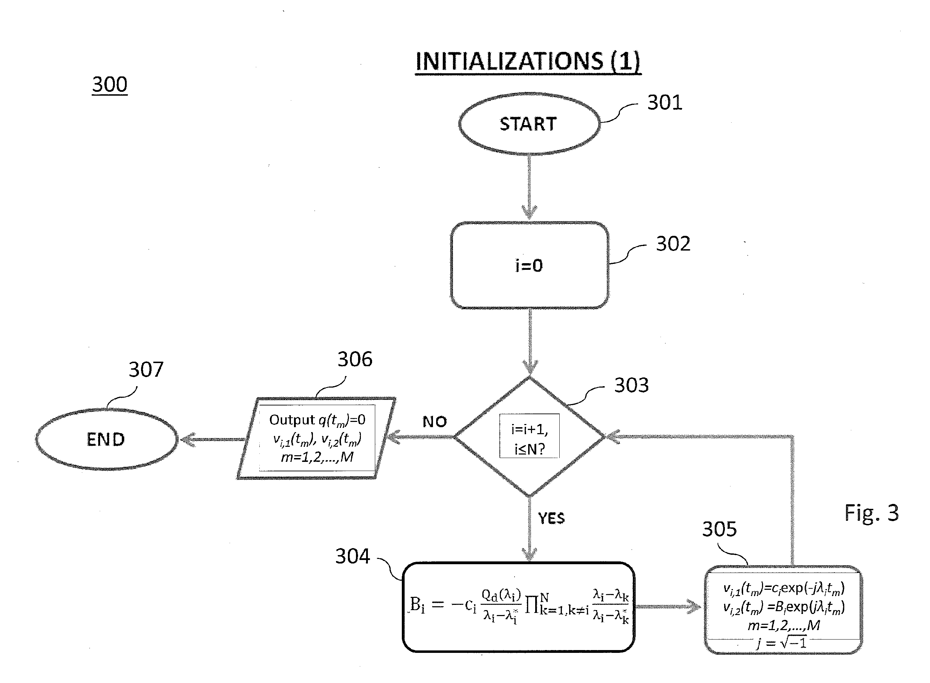

Fig. 3 illustrates a method 300 for implementing the initialization step 203 of method 200 according to embodiments of the disclosure. In the beginning of the initialization step 203, $i$ is set to be zero at step 302. The method 300 comprises setting at least one initial spectral condition based on the at least one spectral modulation function for the corresponding spectral values at step 304. The method 300 further comprises generating at least one initial spectral function $v_i(t)$, which comprises two components $v_{i,1}(t)$ and $v_{i,2}(t)$, for the corresponding spectral values based on the at least one initial spectral condition at step 305. As mentioned above, the first initial parameter $A_i$ may be set to 1 and only the second initial parameter $B_i = -\frac{Q_d(\lambda_i)}{\lambda_i - \lambda_i^*}\prod_{k=1,k\neq i}^{N}\frac{\lambda_i - \lambda_k}{\lambda_i - \lambda_k^*}$ may be considered for the initial spectral conditions. Alternatively, the first initial parameter $A_i$ can also be an arbitrary non-zero value except 1. Since there is one degree of freedom, if $A_i$ is set to some number, $B_i$ will result accordingly.

In the embodiment of Fig. 3, $c_i$ is given to represent the first initial parameter with an arbitrary non-zero value, e.g. $c_i \neq 1$, to better distinguish from the case of $A_i = 1$, and the second initial parameter should therefore be $B_i = -c_i\frac{Q_d(\lambda_i)}{\lambda_i - \lambda_i^*}\prod_{k=1,k\neq i}^{N}\frac{\lambda_i - \lambda_k}{\lambda_i - \lambda_k^*}$. In particular, the step 304 and the step 305 are implemented recursively until each spectral values have been considered for setting the initial spectral conditions to the INFT algorithm. The method 300 therefore comprises determining, at step 303, whether each of the $N$ spectral values $\lambda_i$ have been considered for the step 304 and the step 305. If each of the $N$ spectral values $\lambda_i$ has been considered, the INFT algorithm outputs an initial waveform $q(t) = 0$ and the initial spectral functions $v_i(t)$ at step 306 and ends at step 307. Otherwise, the INFT algorithm will repeat the step 304 and the step 305 until each of the $N$ spectral values $\lambda_i$ have been considered for setting the initial spectral conditions at the step 304 and the step 305. Similarly, the embodiment of **Fig. 3** calculates the initial spectral functions $v_i(t)$ for every sample and the same procedure is also implemented for $M$ signal samples at $(t_1, t_2,..., t_M)$.

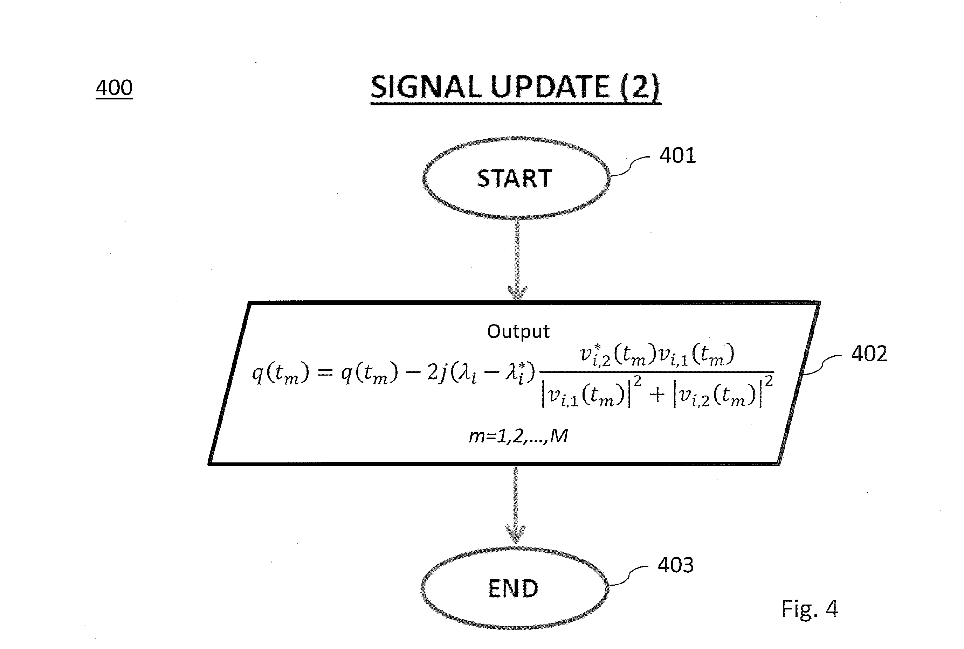

**Fig. 4** illustrates a method 400 for implementing the signal update step 205 of method 200 according to embodiments of the disclosure. The method 400 determines the at least one waveform by recursively updating a current waveform based on a previously generated waveform, the at least one spectral function and the at least one spectral value. For example, the method 400 comprises updating, at step 402, the at least one waveform $q(t)$ based on the at least one initial spectral function and continuing to update recursively the at least one waveform based on at least one updated spectral function until each spectral values have been considered. Likewise, the embodiment of **Fig. 4** calculates the signal update of $q(t)$ for every sample and the same procedure is also implemented for $M$ signal samples at time instants $(t_1, t_2,...,t_M)$.

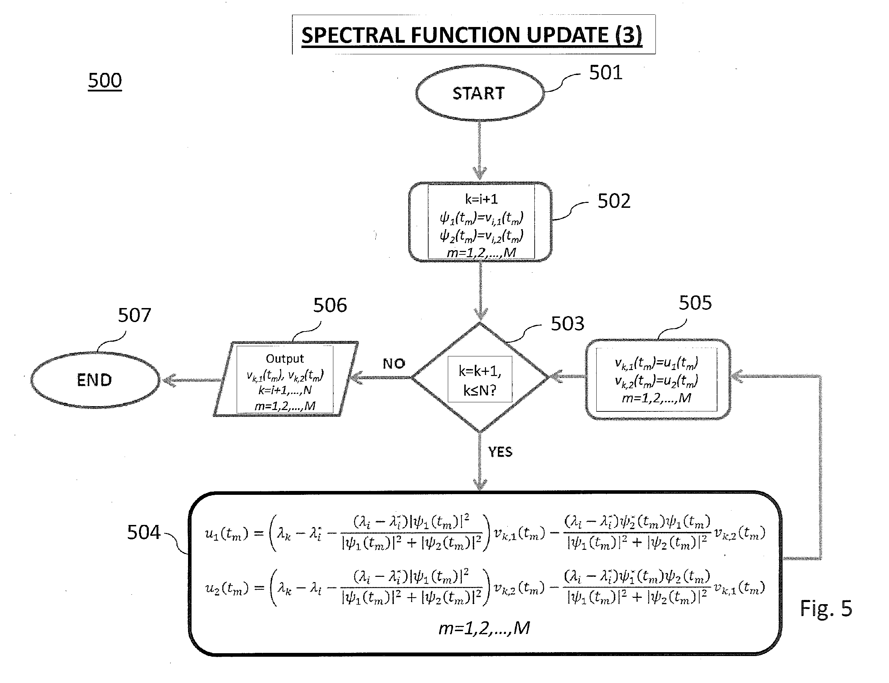

**Fig. 5** illustrates a method 500 for implementing the spectral function update step 206 of method 200 according to embodiments of the disclosure. The method 500 starts from $k = i + 1$ as shown at step 502. The method 500 generates the at least one spectral function by recursively updating a current spectral function based on the at least one spectral value and a previously generated spectral function. For example, the method 500 comprises updating, at step 504 and step 505, the at least one initial spectral function based on the at least one spectral value and continuing to update recursively at least one spectral function based on the at least one spectral value until each spectral values have been considered. The method 500 therefore comprises determining, at step 503, whether each spectral value $\lambda_i$ has been considered for the step 504 and the step 505. If all spectral values $\lambda_i$ have been considered, the INFT algorithm outputs the updated spectral function $v_k(t)$ at step 506 to be used for the signal update step 205 and ends at step 507. Otherwise, the INFT algorithm will repeat the step 504 and the step 505 until all spectral values $\lambda_i$ have been considered. Again, the embodiment of **Fig. 5** calculates the updated spectral functions $v_k(t)$ for every sample and the same procedure is also implemented for $M$ signal samples at $(t_1, t_2,..., t_M)$.

It is appreciated that the method 500 is implemented for updating the spectral function $v_k(t) = (v_{k,1}, v_{k,2})$ for $k = i + 1$ to $N$, i.e. the $N$-th spectral value, which are used for updating $q(t)$ in the next recursion. For example, $v_i = (v_{i,1}, v_{i,2})$ updates $q(t)$ at step 205 or 400 and then this $v_i$ updates $v_k$ for $k \geq i + 1$ at step 500. Subsequently, the index $i$ is increased and the signal update process 400 is continued.

Some of the mathematical expressions shown in **Fig. 4** and **Fig. 5** can be derived according to the documents "M. I. Yousefi, 'Information transmission using the nonlinear Fourier transform,' Ph.D. dissertation, University of Toronto, 2013", and "J. LIN, 'Evolution of the scattering data under the classical darboux transform for su(2) soliton systems,' Acta Mathematicae Applicatae Sinica, vol. 6, no. 4, pp. 308-316, 1990", which are incorporated herein by reference in their entirety.

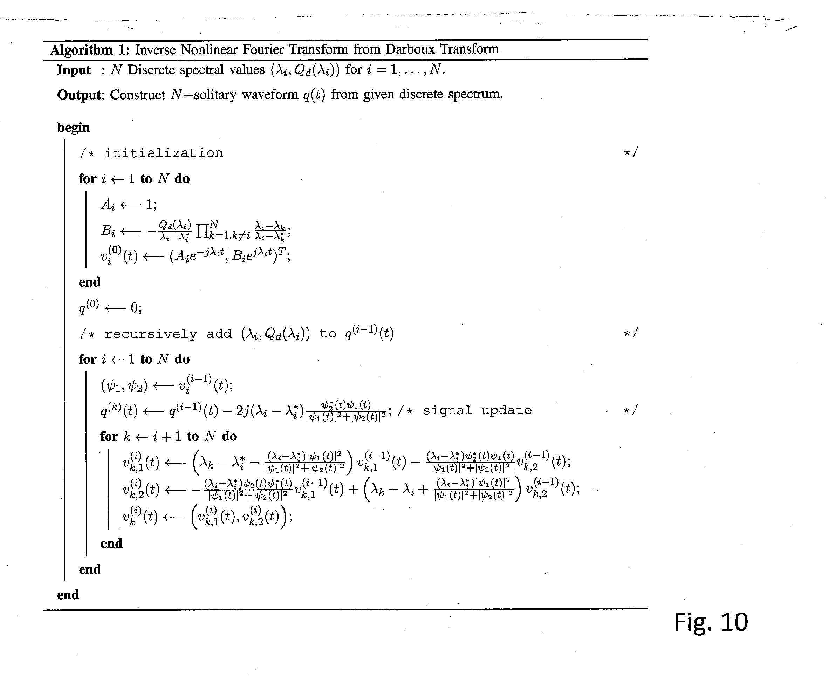

According to the method illustrated in embodiments of flow charts 200, 300, 400 and 500, an example pseudo-code of the proposed INFT algorithm is shown in Algorithm 1 below (see also Fig. 10). In the embodiment of Algorithm 1, the first initial parameter $A_i$ is set to 1 and the second initial parameter $B_i = -\dfrac{Q_d(\lambda_i)}{\lambda_i - \lambda_i^*} \prod_{k=1, k \neq i}^{N} \dfrac{\lambda_i - \lambda_k}{\lambda_i - \lambda_k^*}$ is considered for the initial spectral conditions. Accordingly, the initial spectral functions employed with vector functions herein are determined by $A_i$ and $B_i$ as $v_i^{(0)}(t) = \begin{pmatrix} A_i e^{-j\lambda_i t} \\ B_i e^{j\lambda_i t} \end{pmatrix}$ with $A_i = 1$ and $j = \sqrt{-1}$. Furthermore, the pseudo-code computes the signal waveform $q(t)$ for all spectral values (i.e. eigenvalues) $\lambda_i$ at a time sample, which may be repeated for all time samples to generate the signal waveform $q(t)$ at every sampling time $t$. In other embodiments, when the first initial parameter is an arbitrary non-zero value except 1, for example, $c_i$, $c_i$ may be added to the pseudo-code to modify the second initial parameter as $B_i = -c_i \dfrac{Q_d(\lambda_i)}{\lambda_i - \lambda_i^*} \prod_{k=1, k \neq i}^{N} \dfrac{\lambda_i - \lambda_k}{\lambda_i - \lambda_k^*}$ so that $v_i^{(0)}(t) = \begin{pmatrix} c_i e^{-j\lambda_i t} \\ B_i e^{j\lambda_i t} \end{pmatrix}$, as shown in Fig. 3.

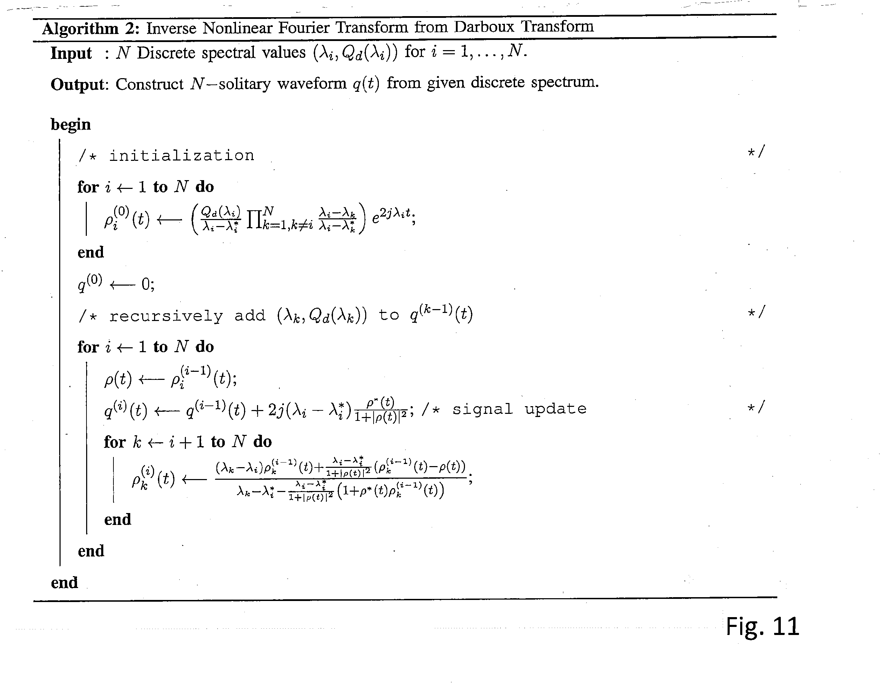

Alternatively, the pseudo-code can be simplified as shown in Algorithm 2 below (see also Fig. 11), resulting in a complexity to be further reduced by a factor of 2. In the embodiment of Algorithm 2, similarly, the first initial parameter $A_i$ is set to 1 and the second initial parameter $B_i = -\dfrac{Q_d(\lambda_i)}{\lambda_i - \lambda_i^*} \prod_{k=1, k \neq i}^{N} \dfrac{\lambda_i - \lambda_k}{\lambda_i - \lambda_k^*}$ is considered for the initial spectral conditions. However, the initial spectral functions employed with scalar functions herein are determined as

$$\rho_i^{(0)}(t) = \left( \frac{Q_d(\lambda_i)}{\lambda_i - \lambda_i^*} \prod_{k=1, k \neq i}^{N} \frac{\lambda_i - \lambda_k}{\lambda_i - \lambda_k^*} \right) e^{2j\lambda_i t}.$$

---

**Algorithm 1: Inverse Nonlinear Fourier Transform from Darboux Transform**

---

**Input** : $N$ Discrete spectral values $(\lambda_i, Q_d(\lambda_i))$ for $i = 1, \ldots, N$.

**Output**: Construct $N-$solitary waveform $q(t)$ from given discrete spectrum.

**begin**

    `/* initialization                                                        */`

    **for** $i \leftarrow 1$ **to** $N$ **do**

        $A_i \leftarrow 1$;

        $B_i \leftarrow -\frac{Q_d(\lambda_i)}{\lambda_i - \lambda_i^*} \prod_{k=1, k \neq i}^{N} \frac{\lambda_i - \lambda_k}{\lambda_i - \lambda_k^*}$;

        $v_i^{(0)}(t) \leftarrow (A_i e^{-j\lambda_i t}, B_i e^{j\lambda_i t})^T$;

    **end**

    $q^{(0)} \leftarrow 0$;

    `/* recursively add` $(\lambda_i, Q_d(\lambda_i))$ `to` $q^{(i-1)}(t)$         `*/`

    **for** $i \leftarrow 1$ **to** $N$ **do**

        $(\psi_1, \psi_2) \leftarrow v_i^{(i-1)}(t)$;

        $q^{(k)}(t) \leftarrow q^{(i-1)}(t) - 2j(\lambda_i - \lambda_i^*) \frac{\psi_2^*(t)\psi_1(t)}{|\psi_1(t)|^2 + |\psi_2(t)|^2}$;  `/* signal update              */`

        **for** $k \leftarrow i + 1$ **to** $N$ **do**

            $v_{k,1}^{(i)}(t) \leftarrow \left( \lambda_k - \lambda_i^* - \frac{(\lambda_i - \lambda_i^*)|\psi_1(t)|^2}{|\psi_1(t)|^2 + |\psi_2(t)|^2} \right) v_{k,1}^{(i-1)}(t) - \frac{(\lambda_i - \lambda_i^*)\psi_2^*(t)\psi_1(t)}{|\psi_1(t)|^2 + |\psi_2(t)|^2} v_{k,2}^{(i-1)}(t)$;

            $v_{k,2}^{(i)}(t) \leftarrow -\frac{(\lambda_i - \lambda_i^*)\psi_2(t)\psi_1^*(t)}{|\psi_1(t)|^2 + |\psi_2(t)|^2} v_{k,1}^{(i-1)}(t) + \left( \lambda_k - \lambda_i + \frac{(\lambda_i - \lambda_i^*)|\psi_1(t)|^2}{|\psi_1(t)|^2 + |\psi_2(t)|^2} \right) v_{k,2}^{(i-1)}(t)$;

            $v_k^{(i)}(t) \leftarrow \left( v_{k,1}^{(i)}(t), v_{k,2}^{(i)}(t) \right)$;

        **end**

    **end**

**end**

---

As such, by setting the appropriate initial spectral conditions for the at least one spectral function, the proposed method can efficiently generate a multi-soliton waveform from the given discrete spectrum $(\lambda_i, Q_d(\lambda_i))$. In other words, solitary waveforms are generated for desired nonlinear spectrum. It is appreciated that the efficiency of the employed algorithms, e.g. Darboux transformation, for recursively generating an exact multi-soliton signal from the desired spectral amplitudes can be significantly improved through the proposed method.

---

**Algorithm 2: Inverse Nonlinear Fourier Transform from Darboux Transform**

---

**Input** : $N$ Discrete spectral values $(\lambda_i, Q_d(\lambda_i))$ for $i = 1, \ldots, N$.

**Output**: Construct $N$−solitary waveform $q(t)$ from given discrete spectrum.

**begin**

    /\* initialization                                      \*/

    **for** $i \leftarrow 1$ **to** $N$ **do**

$$\rho_i^{(0)}(t) \leftarrow \left( \frac{Q_d(\lambda_i)}{\lambda_i - \lambda_i^*} \prod_{k=1, k \neq i}^{N} \frac{\lambda_i - \lambda_k}{\lambda_i - \lambda_k^*} \right) e^{2j\lambda_i t};$$

    **end**

    $q^{(0)} \leftarrow 0;$

    /\* recursively add $(\lambda_k, Q_d(\lambda_k))$ to $q^{(k-1)}(t)$             \*/

    **for** $i \leftarrow 1$ **to** $N$ **do**

        $\rho(t) \leftarrow \rho_i^{(i-1)}(t);$

        $q^{(i)}(t) \leftarrow q^{(i-1)}(t) + 2j(\lambda_i - \lambda_i^*)\frac{\rho^*(t)}{1+|\rho(t)|^2};$ /\* signal update       \*/

        **for** $k \leftarrow i + 1$ **to** $N$ **do**

$$\rho_k^{(i)}(t) \leftarrow \frac{(\lambda_k - \lambda_i)\rho_k^{(i-1)}(t) + \frac{\lambda_i - \lambda_i^*}{1+|\rho(t)|^2}(\rho_k^{(i-1)}(t) - \rho(t))}{\lambda_k - \lambda_i^* - \frac{\lambda_i - \lambda_i^*}{1+|\rho(t)|^2}\left(1 + \rho^*(t)\rho_k^{(i-1)}(t)\right)};$$

        **end**

    **end**

**end**

---

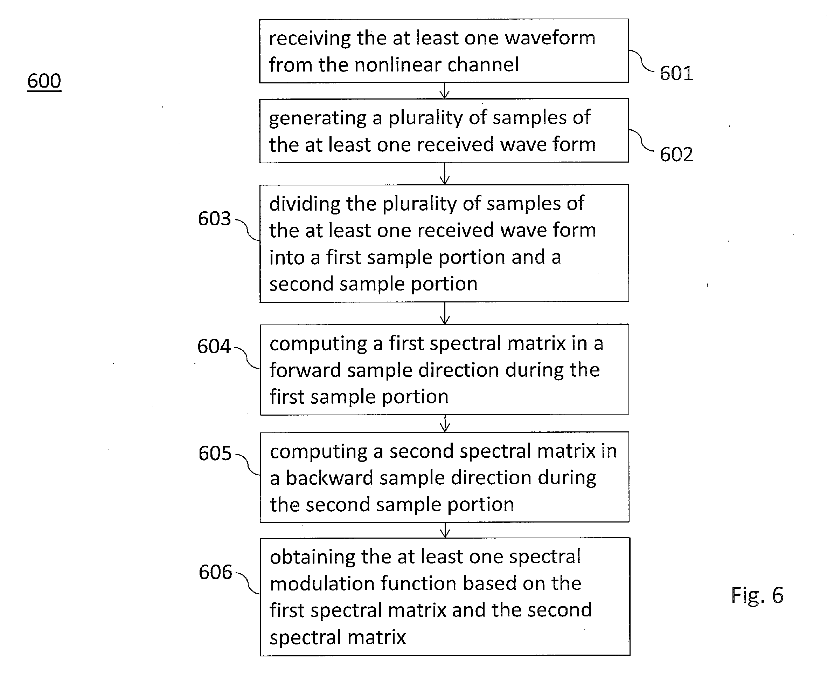

Fig. 6 illustrates a method 600 comprising processing steps taken place in the receiver processor 104 for detecting at least one received waveform with NFT algorithm according to embodiments of the disclosure. In the embodiments, the NFT algorithm is configured to numerically compute the nonlinear spectrum of received pulses $R(t)$ from samples thereof. The method 600 comprises receiving the at least one waveform from the nonlinear channel at step 601. The at least one received waveform comprises at least one spectral modulation function $Q_d(\lambda_i)$ of the nonlinear spectrum corresponding to at least one spectral value $\lambda_i$. The at least one spectral modulation function comprises one or more spectral coefficients, e.g. $a(\lambda)$ and $b(\lambda)$, where the discrete nonlinear spectrum $Q_d(\lambda_i) = \dfrac{b(\lambda_i)}{a'(\lambda_i)}$. The method 600 comprises generating, at step 602, a plurality of samples of the at least one received waveform by sampling the at least one received waveform. The method 600 further comprises dividing the plurality of samples of the at least one received waveform into a first sample portion and a second sample portion at step 603, computing a first spectral matrix in a forward sample direction during the first sample portion of the at least one received waveform at step 604, computing a second spectral matrix in a backward sample direction during the second sample portion of the at least one received waveform at step 605 and obtaining, at step 606, the at least one spectral modulation function for each of the at least one received waveform based on the first spectral matrix and the second spectral matrix.

It may be further noted that the steps of dividing the plurality of samples of the at least one received waveform into the first sample portion and the second sample portion (603), computing the first spectral matrix in the forward sample direction (604) and the second spectral matrix in the backward sample direction (605) and obtaining the at least one spectral modulation function for the at least one received waveform (606) may be implemented for each eigenvalue/spectral value $\lambda_i$ to calculate the corresponding spectral modulation function $Q_d(\lambda_i)$. Therefore, these steps may be repeatedly computed until each of the at least one spectral value $\lambda_i$ has been considered.

The principle of the proposed method computing the nonlinear spectrum of received pulses $R(t)$ based on nonlinear Fourier transform is explained as follows. In the following, the received pulses are represented by a time-domain pulse signal $q(t)$ for being consistent with the mathematical expressions shown above. Nonlinear Fourier transform is usually defined based on the Zakharov-Shabat system. Considering the following partial differential equation for a pulse $q(t)$ with a finite pulse width $t \in [-T_0, T_0]$:

$$\frac{\partial}{\partial t}\phi(t;\lambda) = \begin{pmatrix} -j\lambda & q(t) \\ -q^*(t) & j\lambda \end{pmatrix} \phi(t;\lambda), \ \phi(-T_0;\lambda) = \begin{pmatrix} 1 \\ 0 \end{pmatrix} e^{j\lambda T_0}. \tag{9}$$

where $\phi(t;\lambda) = (\phi_1(t;\lambda),\phi_2(t;\lambda))^T$, $a(\lambda) = e^{+j\lambda T_0}\phi_1(T_0;\lambda)$ and $b(\lambda) = e^{-j\lambda T_0}\phi_2(T_0;\lambda)$ can be defined.

The Nonlinear spectrum of signal $q(t)$ has two parts: the continuous part $Q_c(\lambda) = \frac{b(\lambda)}{a(\lambda)}$ for $\lambda \in R$ and the

discrete part $Q_d(\lambda_i) = \frac{b(\lambda_i)}{a'(\lambda_i)}$, where $a'(\lambda_i) = \frac{d}{d\lambda}a(\lambda)\big|_{\lambda=\lambda_i}$ for all $\{\lambda_1,\cdots,\lambda_n\} \subset C^+\backslash R$ with the finite set satisfying $a(\lambda)$

= 0. The discrete spectrum corresponds to the solitonic part of signal $q(t)$. This can be observed when it is assumed to be symmetric around zero, which can be attained by taking a larger symmetry or more efficiently, by translation in time which modifies the nonlinear spectrum by a multiplicative factor, according to the document "M. I. Yousefi, 'Information transmission using the nonlinear Fourier transform,' Ph.D. dissertation, University of Toronto, 2013", which is incorporated herein by reference in its entirety.

According to the present disclosure, the proposed method employing "forward-backward" algorithm is a general/universal method which can be applied to any integration based methods such as Crank-Nicolson algorithm to improve the numerical performance thereof. Using one of these methods, it numerically solves equation (9) partly in forward direction and partly in backward direction. Finally it combines the results to compute the nonlinear spectrum. With the same complexity, it has a much higher precision than the underlying method. Without loss of generality, this method is explained here for a particular underlying method which has a simple representation and estimates the spectrum with higher precision than the above mentioned algorithms. This underlying algorithm is called "Trapezoid Discretization" as it is based on trapezoid rule of integral.

Assuming that the pulse $q(t)$ is uniformly sampled with $N + 1$ samples, it provides samples $q(t_n)$ where $t_n = -T_0 + nh$, $0 \le n \le N$ and $h = 2T_0/N$. Let m = cN for some $0 < c < 1$. The computation procedure can be divided into two parts:

- the forward recursion, for $1 \le n \le m$,

$$w_n = G_n w_{n-1}, \ w_0 = G_0^{\frac{1}{2}}\begin{pmatrix} 1 \\ 0 \end{pmatrix}$$

$$w'_n = G_n w'_{n-1} + G'_n w_{n-1}, \ w'_0 = (G_0^{\frac{1}{2}})'\begin{pmatrix} 1 \\ 0 \end{pmatrix}$$

- and the backward recursion, for $m < n \le N$,

$$v_{n-1} = G_n^{-1}v_n, \ v_N = G_N^{\frac{1}{2}}\begin{pmatrix} 0 \\ 1 \end{pmatrix}$$

$$v'_{n-1} = G_n^{-1}v'_n + (G_n^{-1})'v_n, \ v'_N = (G_N^{\frac{1}{2}})'\begin{pmatrix} 0 \\ 1 \end{pmatrix}$$

Merging two recursions

$$a_N(\lambda) = w_{m,1}v_{m,2} - v_{m,1}w_{m,2}$$

$$a'_N(\lambda) = w'_{m,1}v_{m,2} + w_{m,1}v'_{m,2} - v'_{m,1}w_{m,2} - v_{m,1}w'_{m,2}$$

and

$$Q_c(\lambda) = \frac{b_N(\lambda)}{a_N(\lambda)}, \quad b_N(\lambda) = a_N(\lambda)\frac{v^*_{m,1}}{v_{m,2}} + \frac{w_{m,2}}{v_{m,2}}, \quad \text{for } \lambda \in \mathbb{R},$$

$$Q_d(\lambda_i) = \frac{b_N(\lambda_i)}{a'_N(\lambda_i)}, \quad b_N(\lambda_i) = \frac{w_{m,2}}{v_{m,2}}, \quad \text{for } \lambda_i \in \mathbb{C}^+ \text{ the eigenvalues of } q(t)$$

$|q_n| = |q(t_n)|$ and $e^{j\theta_n} = \dfrac{q(t_n)}{|q(t_n)|}$ are defined. $G_n^\alpha$ and $(G_n^\alpha)'$ for $\alpha = \pm 1, \pm\dfrac{1}{2}$ is given by:

$$G_n^\alpha = \begin{pmatrix} \cos(|q_n|\alpha h) & \sin(|q_n|\alpha h)e^{j\theta_n + j2\lambda t_n} \\ -\sin(|q_n|\alpha h)e^{-j\theta_n - j2\lambda t_n} & \cos(|q_n|\alpha h) \end{pmatrix},$$

and

$$(G_n^\alpha)' = +j2t_n\sin(|q_n|\alpha h)\begin{pmatrix} 0 & e^{j\theta_n + j2\lambda t_n} \\ e^{-j\theta_n - j2\lambda t_n} & 0 \end{pmatrix}.$$

According to an embodiment, the proposed method computes the nonlinear spectrum based on Trapezoid Discretization algorithm. Considering the equation (9) and assuming

$$\psi(t;\lambda) = \begin{pmatrix} \psi_1 \\ \psi_2 \end{pmatrix} = \begin{pmatrix} \phi_1 e^{+j\lambda t} \\ \phi_2 e^{-j\lambda t} \end{pmatrix}$$

one can apply $\psi(t = -T_0; \lambda) = (1,0)^T$ and the temporal equation (9) is then changed to

$$\frac{\partial}{\partial t}\psi(t;\lambda) = \begin{pmatrix} 0 & q(t)e^{+j2\lambda t} \\ -q^*(t)e^{-j2\lambda t} & 0 \end{pmatrix}\psi(t;\lambda), \tag{10}$$

and $a(\lambda) = \psi_1(T_0)$ and $b(\lambda) = \psi_2(T_0)$. The trapezoid rule can be used to numerically compute $\psi(T_0; \lambda)$. In the embodiment, the following scalar ordinary differential equation is considered:

$$\frac{d}{dt}x(t) = f(t)x(t), \quad \text{with initial condition } x(0) = 1.$$

Its unique solution is

$$x(T) = \exp(\int_0^T f(\tau)d\tau)$$

Now the trapezoid rule is used to estimate the integral. Let $t_n = hn$, $0 \le n \le N$ where $h = T/N$, then

$$\int_0^t f(\tau)d\tau = h\sum_{n=0}^{N} \frac{1}{2}(f(t_n) + f(t_{n+1})) + R_e$$

and the error term is $R_e = \dfrac{T^3}{12N^2}f''(t_c)$, for some $t_c \in [0,T]$. Neglecting the error term, $x(T) \approx x_N$ can be recursively estimated as follows:

$$x_{n+1} = e^{\frac{h}{2}f(t_{n+1})}e^{\frac{h}{2}f(t_n)}x_n \tag{11}$$

Defining $y_n = e^{\frac{h}{2}f(t_n)}x_n$, $y_{n+1} = e^{hf(t_{n+1})}y_n$ and $y_0 = \exp\left(\dfrac{h}{2}f(0)\right)$, it is noted that $x_{n+1}$ is the exact solution of following differential equation at $t = t_n$,

$$\frac{d}{dt}x(t) = \tilde{f}(t)x(t), \text{ with initial condition } x(0) = 1,$$

and $f(t)$ is a step function defined as

$$\tilde{f}(t) = \begin{cases} f(0) & 0 \leq t < h/2 \\ f(t_n) & nh - h/2 \leq t < nh + h/2 \text{ and } 1 \leq n < N \\ f(T) & T - h/2 \leq t \leq T \end{cases}$$

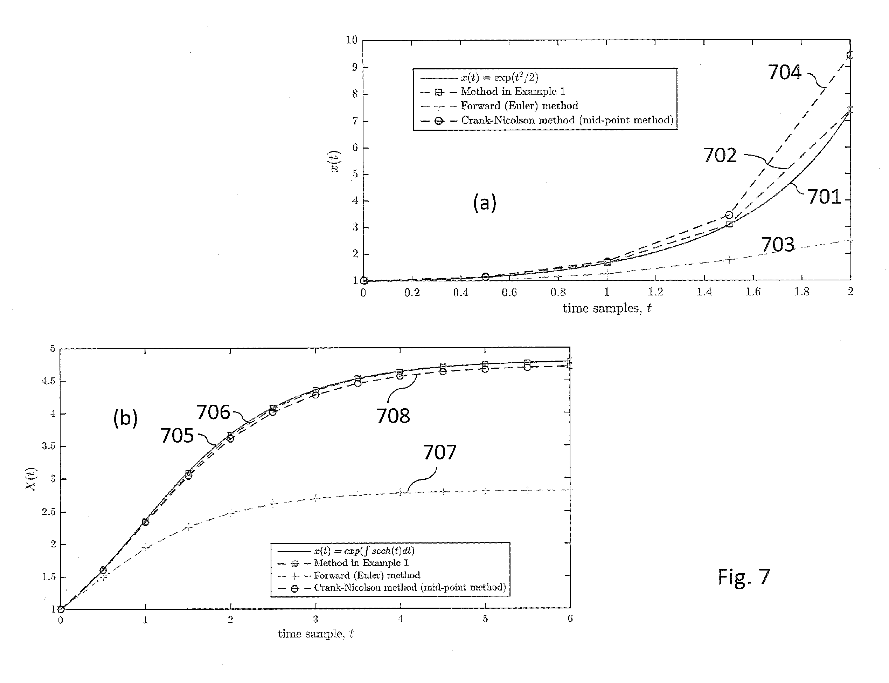

The precision of Trapezoid Discretization method is shown for two test functions $f(t) = t$ and $f(t) = \text{sech}(t)$ in Fig. 7(a) and Fig. 7(b), respectively, where this method is also compared with the Forward (Euler) method and the Crank-Nicolson method. Curves 701 and 705 represent the analytical solutions of the two test function $x(t) = \exp(t^2/2)$, and $x(t) = \exp(\int \text{sech}(t)\,dt)$, respectively. **Fig. 7(a)** compares the numerical solutions with respect to $x(t) = \exp(t^2/2)$ shown by the curve 701, based on the Trapezoid Discretization method (curve 702), the Forward (Euler) method (curve 703) and the Crank-Nicolson method (curve 704). Fig. 7(b) compares the numerical solutions with respect to $x(t) = \exp(\int \text{sech}(t)\,dt)$ shown by the curve 705, based on the Trapezoid Discretization method (curve 706), the Forward (Euler) method (curve 707) and the Crank-Nicolson method (curve 708). One can clearly observe that the Trapezoid Discretization method shows the best accuracy compared to the other methods.

It would be more convenient if the solution of differential equation (10) could be written as follows:

$$\psi(t;\lambda) = \exp\left(\int_{-T_0}^t F(\tau;\lambda)d\tau\right)\begin{pmatrix}1\\0\end{pmatrix}, \text{for } t \geq -T_0$$

where

$$F(\tau;\lambda) = \begin{pmatrix} 0 & q(\tau)e^{+j2\lambda\tau} \\ -q^*(\tau)e^{-j2\lambda\tau} & 0 \end{pmatrix}.$$

However, this is not allowed since $F(\tau_1;\lambda)F(\tau_2;\lambda) \neq F(\tau_2;\lambda)F(\tau_1;\lambda)$. Nevertheless, the step function $F(t;\lambda)$ following the trapezoid rule of integral can still be defined. Let $h = 2T_0/N$ where N is the discretization number and $t_n = -T_0 + nh$.

Define

$$\tilde{F}(t;\lambda) = \begin{cases} F(-T_0;\lambda) & -T_0 \le t < -T_0 + h/2 \\ F(t_n;\lambda) & t_n - h/2 \le t < t_n + h/2 \text{ and } 1 \le n < N \\ F(T_0;\lambda) & t_N - h/2 \le t \le T_0 \end{cases}$$

Considering (10) again in the interval $t \in [t_n, t_{n+1})$

$$\frac{\partial}{\partial t}\psi(t;\lambda) = F(t;\lambda)\psi(t;\lambda) \approx \tilde{F}(t;\lambda)\psi(t;\lambda).$$

and partitioning $[t_n, t_{n+1}) = \left[t_n, t_n + \frac{h}{2}\right) \cup \left[t_{n+1} - \frac{h}{2}, t_{n+1}\right)$, the following equation can be obtained:

$$\psi(t_{n+1};\lambda) \approx \exp(F(t_{n+1};\lambda)\frac{h}{2})\exp(F(t_n;\lambda)\frac{h}{2})\psi(t_n;\lambda).$$

The above equation is similar to the equation (11) which is obtained from the trapezoid rule of integral for a scalar differential equation. One can define

$$w_{n+1} = \exp(F(t_{n+1};\lambda)h)w_n, \quad w_0 = \exp(F(t_0;\lambda)\frac{h}{2})\begin{pmatrix} 1 \\ 0 \end{pmatrix} \tag{12}$$

Therefore, $\psi(t_n) \approx \exp\left(-F(t_n;\lambda)\frac{h}{2}\right)w_n$, and

$$\begin{pmatrix} a_N(\lambda) \\ b_N(\lambda) \end{pmatrix} = \exp(-F(t_N;\lambda)\frac{h}{2})w_N, \tag{13}$$

where $a_N(\lambda)$ and $b_N(\lambda)$ are the numerical approximation of $a(\lambda)$ and $b(\lambda)$. It is noted that as $N \to \infty$, $a_N(\lambda) \to a(\lambda)$ and $b_N(\lambda) \to b(\lambda)$. Computing $\exp(F(t_n;\lambda)h)$, for $|q_n| = |q(t_n)|$ and $e^{j\theta_n} = \frac{q(t_n)}{|q(t_n)|}$, the following can be verified by the eigenvalue decomposition:

$$F(t_n;\lambda) = \frac{1}{2}\begin{pmatrix} 1 & je^{j\theta_n + j2\lambda t_n} \\ je^{-j\theta_n - j2\lambda t_n} & 1 \end{pmatrix}\begin{pmatrix} j|q_n| & 0 \\ 0 & -j|q_n| \end{pmatrix}\begin{pmatrix} 1 & -je^{j\theta_n + j2\lambda t_n} \\ -je^{-j\theta_n - j2\lambda t_n} & 1 \end{pmatrix},$$

and thus,

$$\exp(F(t_n;\lambda)h) = \frac{1}{2}\begin{pmatrix} 1 & je^{j\theta_n + j2\lambda t_n} \\ je^{-j\theta_n - j2\lambda t_n} & 1 \end{pmatrix}\begin{pmatrix} e^{j|q_n|h} & 0 \\ 0 & e^{-j|q_n|h} \end{pmatrix}\begin{pmatrix} 1 & -je^{j\theta_n + j2\lambda t_n} \\ -je^{-j\theta_n - j2\lambda t_n} & 1 \end{pmatrix}$$
$$= \begin{pmatrix} \cos(|q_n|h) & \sin(|q_n|h)e^{j\theta_n + j2\lambda t_n} \\ -\sin(|q_n|h)e^{-j\theta_n - j2\lambda t_n} & \cos(|q_n|h) \end{pmatrix}$$

It is noted that $\exp\left(\pm F(t_n;\lambda)\frac{h}{2}\right)$ is obtained by replacing $h$ with $\frac{\pm h}{2}$ in the above matrix. Consequently, one obtains

$$w_n = \begin{pmatrix} \cos(|q_n|h) & \sin(|q_n|h)e^{j\theta_n + j2\lambda t_n} \\ -\sin(|q_n|h)e^{-j\theta_n - j2\lambda t_n} & \cos(|q_n|h) \end{pmatrix} w_{n-1}$$

(14)

To compute the discrete spectrum, $a'(\lambda) = \dfrac{d}{d\lambda} a(\lambda)$ needs to be estimated.

Defining

$$G_n = \begin{pmatrix} \cos(|q_n|h) & \sin(|q_n|h)e^{j\theta_n + j2\lambda t_n} \\ -\sin(|q_n|h)e^{-j\theta_n - j2\lambda t_n} & \cos(|q_n|h) \end{pmatrix},$$

and

$$G'_n = +j2t_n \sin(|q_n|h) \begin{pmatrix} 0 & e^{j\theta_n + j2\lambda t_n} \\ e^{-j\theta_n - j2\lambda t_n} & 0 \end{pmatrix}.$$

it is noted that $\exp\left(\pm F(t_n; \lambda)\dfrac{h}{2}\right) = G_n^{\pm\frac{h}{2}}$.

Differentiating from (12),

$$w'_{n+1} = G_{n+1} w'_n + G'_{n+1} w_n, \quad w'_0 = (G_0^{\frac{1}{2}})' \begin{pmatrix} 1 \\ 0 \end{pmatrix}$$

(15)

where $w'_{n+1} = \left(\dfrac{d}{d\lambda} W_{(n+1,1)}, \dfrac{d}{d\lambda} W_{(n+1,2)}\right)^T$.

One can also verify that

$$\psi'(t_n; \lambda) \approx G_n^{-\frac{1}{2}} \left( w'_n - 2jt_n \sin(|q_n|\frac{h}{2}) \begin{pmatrix} 0 & e^{j\theta_n + j2\lambda t_n} \\ e^{-j\theta_n - j2\lambda t_n} & 0 \end{pmatrix} G_n^{-\frac{1}{2}} w_n \right)$$

$$= G_n^{-\frac{1}{2}} w'_n - 2jt_n \sin(|q_n|\frac{h}{2}) \begin{pmatrix} 0 & e^{j\theta_n + j2\lambda t_n} \\ e^{-j\theta_n - j2\lambda t_n} & 0 \end{pmatrix} w_n,$$

where

$$G_n^{-\frac{1}{2}} = \begin{pmatrix} \cos(|q_n|\frac{h}{2}) & -\sin(|q_n|\frac{h}{2})e^{j\theta_n + j2\lambda t_n} \\ \sin(|q_n|\frac{h}{2})e^{-j\theta_n - j2\lambda t_n} & \cos(|q_n|\frac{h}{2}) \end{pmatrix}.$$

Finally, $a'(\lambda)$ and $b'(\lambda)$ can be represented by:

$$\begin{pmatrix} a'(\lambda) \\ b'(\lambda) \end{pmatrix} \approx \begin{pmatrix} a'_N(\lambda) \\ b'_N(\lambda) \end{pmatrix} = G_N^{-\frac{1}{2}} w'_N - 2jt_N \sin(|q_N|\frac{h}{2}) \begin{pmatrix} 0 & e^{j\theta_N + j2\lambda t_N} \\ e^{-j\theta_N - j2\lambda t_N} & 0 \end{pmatrix} w_N.$$

(16)

Therefore, $a(\lambda)$, $b(\lambda)$ = and $a'(\lambda)$ can be numerically computed from (12), (13), (15) and (16).

The final recursion looks like the layer-peeling algorithm. However, there are some small differences. The layer-peeling algorithm is a kind of forward (Euler) algorithm and obtained from approximating $q(t)$ as a piece-wise constant function. The proposed algorithm is a kind of mid-point algorithms (Trapezoid rule) which usually provides better approximations (see Fig. 7). Moreover, the matrix $F(t)$ can be approximated as a piece-wise constant function. The other practical advantage is the equation has a much simpler form than the layer-peeling algorithm.

The first order approximation of $G_n$ gives the forward (Euler) discretization method. When $|q_n|h << 1$, $\cos(|q_n|h) \approx 1$ and $\sin(|q_n|h) \approx |q_n|h$, one has

$$G_n \approx \begin{pmatrix} 1 & hq(t_n)e^{j2\lambda t_n} \\ -hq^*(t_n)e^{-j2\lambda t_n} & 1 \end{pmatrix}.$$

The second order approximation of $G_n$ gives the promising Crank-Nicolson method. Using the relations $\cos(2\theta)$ = $(1 - \tan^2(\theta))/(1 + \tan^2(\theta))$ and $\sin(2\theta) = (2\tan(\theta))/(1 + \tan^2(\theta))$ and approximation $\tan\left(|q_n|\frac{h}{2}\right) \approx |q_n|\frac{h}{2}$, $G_n$ can be re-written as:

$$G_n \approx \frac{1}{1 + \frac{h^2}{4}|q_n|^2} \begin{pmatrix} 1 - \frac{h^2}{4}|q_n|^2 & hq(t_n)e^{j2\lambda t_n} \\ -hq^*(t_n)e^{-j2\lambda t_n} & 1 - \frac{h^2}{4}|q_n|^2 \end{pmatrix},$$

which is the normalized matrix of the Crank-Nicolson method for solving, i.e.

$$\frac{\psi(t_{n+1}; \lambda) - \psi(t_n; \lambda)}{h} \approx \frac{1}{2}\left(F(t_n; \lambda)\psi(t_n; \lambda) + F(t_{n+1}; \lambda)\psi(t_{n+1}; \lambda)\right).$$

The Trapezoid Discretization method and all the one-step discretization NFT methods, e.g. Ablowitz-Ladik algorithms, Crank-Nicolson method, Runge-Kutta method, Layer-peeling method, are robust in estimation of the continuous spectrum and can be used to find the eigenvalues ($a(\lambda) = 0$) with a small numerical error. However, they are very naive in estimation of the discrete spectral amplitudes, $Q_d(\lambda_j)$. The estimation error may exponentially grow with a slight change of step-size $h$. A small numerical error in $a(\lambda)$ may lead to an exponentially large error in estimating $b(\lambda)$. Considering the temporal equation (10) at an eigenvalue of $q(t)$, namely $\lambda = \omega + j\eta$ with $\eta > 0$. It is known that $a(\lambda) = 0$ and $b(\lambda) = $ is a finite complex number. Assuming that a numerical method estimates $\widetilde{\psi}(T_0 - 1) = \psi(T_0 - 1) + (\delta_1, \delta_2)^T$ where $(\delta_1, \delta_2)^T$ is its estimation error, looking at (10) for $T_0 - 1 < t < T_0$, the changes in $\frac{\partial}{\partial t}\psi_1$ is proportional to $|q(t)|\exp(-2\eta t)\delta_2$ which is very small when $T_0 >> 1$ and thus, $a(\omega + j\eta)$ is finally approximated by $\widetilde{\psi_1}(T_0) \approx \delta_1$. However, the change in $\frac{\partial}{\partial t}\psi_2$ is proportional to $|q(t)|\exp(+2\eta t)\delta_1$ which can be very large for a large $\eta$. It means that the gap $\widetilde{\psi_2}(T_0) - b(\lambda)$ can become exponentially large for a small error $\delta_1$ in $a(\lambda)$. One can observe that $\widetilde{\psi_2}$ diverges exponentially from the exact solution $\psi_2(t)$ when $h$ is not small enough.

However, a one-step NFT method can be significantly stabilized by the proposed forward-backward algorithm. Herein the algorithm is explained based on the Trapezoid Discretization method but the algorithm can be applied to any one-step method. Considering equation (14), one can write,

$$\begin{pmatrix} a_N(\lambda) \\ b_N(\lambda) \end{pmatrix} = G_N^{-\frac{1}{2}} G_N G_{N-1} \cdots G_2 G_1 G_0^{+\frac{1}{2}} \begin{pmatrix} 1 \\ 0 \end{pmatrix}$$

$$= R_N L_N \begin{pmatrix} 1 \\ 0 \end{pmatrix},$$

where $R_N = G_N^{\frac{-1}{2}} G_N G_{N-1} \cdots G_{m+1}$ and $L_N = G_m G_{m-1} \cdots G_1 G_0^{\frac{1}{2}}$ and the integer $m = cN$, $0 < c < 1$. First, let $N \to \infty$. Then, $(a_N(\lambda), b_N(\lambda)) \to (a(\lambda), b(\lambda))$ and $L_N \to L$ where $L$ is the scattering matrix of $q(t)|_{\{-T_0 < t < T_0(2c-1)\}}$ and $R_N \to R$ where $R$ is the scattering matrix of $q(t)|_{\{T_0(2c-1) \le t < T_0\}}$. Let $R_{kl}$ and $L_{kl}$ denote the entry $(k, l)$ of matrices $R$ and $L$. Then,

$$a(\lambda) = R_{11}L_{11} + R_{12}L_{21}$$

$$a'(\lambda) = L_{11}\frac{d}{d\lambda}R_{11} + R_{11}\frac{d}{d\lambda}L_{11} + L_{21}\frac{d}{d\lambda}R_{12} + R_{12}\frac{d}{d\lambda}L_{21}$$

$$b(\lambda) = R_{21}L_{11} + R_{22}L_{21}$$

The determinant of matrices $G_n$ is one. It implies that $R$ has determinant one, i.e. $R_{11}R_{22} - R_{12}R_{21} = 1$. Therefore,

$$R^{-1} = G_{m+1}^{-1} G_{m+2}^{-1} \cdots G_{N-1}^{-1} G_N^{-1} G_N^{\frac{1}{2}} = \begin{pmatrix} R_{22} & -R_{12} \\ -R_{21} & R_{11} \end{pmatrix}.$$

Let $G_{n,kl}$ denote the entry $(k, l)$ of matrix $G_n$. One can verify that if $\lambda \in R$, then $G_{n,22} = G_{n,11}^*$ and $G_{n,21} = -G_{n,12}^*$. It implies that $R_{22} = R_{11}^*$ and $R_{21} = -R_{12}^*$ for $\lambda \in R$. We have

$$\begin{pmatrix} L_{11} \\ L_{21} \end{pmatrix} = L \begin{pmatrix} 1 \\ 0 \end{pmatrix}, \begin{pmatrix} -R_{12} \\ R_{11} \end{pmatrix} = R^{-1} \begin{pmatrix} 0 \\ 1 \end{pmatrix}.$$

It has shown $a(\lambda)$ and $a'(\lambda)$ as a function of $L_{11}$, $L_{21}$, $R_{11}$ and $R_{12}$. $b(\lambda) =$ can also be represented in terms of these parameters:

$$b(\lambda) = R_{21}L_{11} + R_{22}L_{21} = R_{21}L_{11} + \frac{1 + R_{12}R_{21}}{R_{11}}L_{21}$$

$$= \frac{R_{21}(R_{11}L_{11} + R_{12}L_{21}) + L_{21}}{R_{11}} = a(\lambda)\frac{R_{21}}{R_{11}} + \frac{L_{21}}{R_{11}}.$$

For $\lambda \in R$,

$$b(\lambda) = -a(\lambda)\frac{R_{12}^*}{R_{11}} + \frac{L_{21}}{R_{11}}. \qquad (17)$$

For eigenvalue $\lambda_i$ of q(t) (i.e. $a(\lambda_i) = 0$),

$$b(\lambda_i) = \frac{L_{21}}{R_{11}}. \qquad (18)$$

In equation (18), the contribution of $a(\lambda_i)\frac{R_{21}}{R_{11}}$ from $b(\lambda_i)$ is removed as $a(\lambda_i) = 0$. This part causes a large numerical error in one-step methods. One can verify that $R_{21}$ is very large when $Imag(\lambda) = \frac{1}{2}(\lambda - \lambda^*) > 0$. Then small numerical error $a_N(\lambda_i) = \delta_1$ leads to a large numerical error $\delta_1 \frac{R_{21}}{R_{11}}$ in estimation $b_N(\lambda_i)$.

Considering a finite $N$, $(L_{11}, L_{21})$ and $(-R_{12}, R_{11})$ can be estimated from two separate recursions:

The forward recursion computes $(L_{11}, L_{21})$ and its derivative, for $1 \le n \le m$.

$$w_n = G_n w_{n-1}, \quad w_0 = G_0^{\frac{1}{2}} \begin{pmatrix} 1 \\ 0 \end{pmatrix}$$

$$w_n' = G_n w_{n-1}' + G_n' w_{n-1}, \quad w_0' = (G_0^{\frac{1}{2}})' \begin{pmatrix} 1 \\ 0 \end{pmatrix}$$

1 The above equations are the same as (14) and (15) in which $G_n$, $G_n'$, $G_0^{\frac{1}{2}}$ and $\left(G_0^{\frac{1}{2}}\right)'$ are defined. Thus,

$$\begin{pmatrix} L_{11} \\ L_{21} \end{pmatrix} \approx w_m = \begin{pmatrix} w_{m,1} \\ w_{m,2} \end{pmatrix}, \quad \begin{pmatrix} \frac{d}{d\lambda} L_{11} \\ \frac{d}{d\lambda} L_{21} \end{pmatrix} \approx w_m' = \begin{pmatrix} w_{m,1}' \\ w_{m,2}' \end{pmatrix} \qquad (19)$$

Moreover, the backward recursion computes $(-R_{12}, R_{11})$ and its derivative, for $m < n \le N$.

$$v_{n-1} = G_n^{-1} v_n, \quad v_N = G_N^{\frac{1}{2}} \begin{pmatrix} 0 \\ 1 \end{pmatrix}$$

$$v_{n-1}' = G_n^{-1} v_n' + (G_n^{-1})' v_n, \quad v_N' = (G_N^{\frac{1}{2}})' \begin{pmatrix} 0 \\ 1 \end{pmatrix}$$

$G_n^{-1}$ is obtained by replacing $h$ with $-h$ in $G_n$ as follows:

$$G_n^{-1} = \begin{pmatrix} \cos(|q_n|h) & -\sin(|q_n|h)e^{j\theta_n + j2\lambda t_n} \\ +\sin(|q_n|h)e^{-j\theta_n - j2\lambda t_n} & \cos(|q_n|h) \end{pmatrix},$$

and,

$$(G_n^{-1})' = -j2t_n \sin(|q_n|h) \begin{pmatrix} 0 & e^{j\theta_n + j2\lambda t_n} \\ e^{-j\theta_n - j2\lambda t_n} & 0 \end{pmatrix}.$$

As a result,

$$\begin{pmatrix} -R_{12} \\ R_{11} \end{pmatrix} \approx v_m = \begin{pmatrix} v_{m,1} \\ v_{m,2} \end{pmatrix}, \quad \begin{pmatrix} -\frac{d}{d\lambda} R_{12} \\ \frac{d}{d\lambda} R_{11} \end{pmatrix} \approx v_m' = \begin{pmatrix} v_{m,1}' \\ v_{m,2}' \end{pmatrix} \qquad (20)$$

From (19) and (20), we have

$$a_N(\lambda) = w_{m,1} v_{m,2} - v_{m,1} w_{m,2}$$

$$a'_N(\lambda) = w'_{m,1} v_{m,2} + w_{m,1} v'_{m,2} - v'_{m,1} w_{m,2} - v_{m,1} w'_{m,2}$$

and

$$b_N(\lambda) = a_N(\lambda) \frac{v^*_{m,1}}{v_{m,2}} + \frac{w_{m,2}}{v_{m,2}}, \quad \text{for } \lambda \in \mathbb{R},$$

$$b_N(\lambda_i) = \frac{w_{m,2}}{v_{m,2}}, \quad \text{for } \lambda_i \in \mathbb{C}^+ \text{ the eigenvalues of } q(t)$$

The main question is how to choose $m = cN$, c is the sample portion dividing ratio. Considering the update matrix $G_n$ for $\lambda = \omega + j\eta$: $|G_{n,12}| = |q(t_n)|\exp(-2\eta t_n)$ and $|G_{n,21}| = |q(t_n)|\exp(+2\eta t_n)$, the scattering parameter $L_{21}$ is the integral of $G_{n,21}$ and thus, the numerical estimation error in $L_{21}$ becomes large when $G_{n,21}$ is large. A similar behaviour is between $R_{12}$ and $G_{n,12}$.

Therefore, one can choose

$$c = \arg \min_{t=T_0(2c-1)} |q(t)| \exp(2\eta|t|). \tag{21}$$

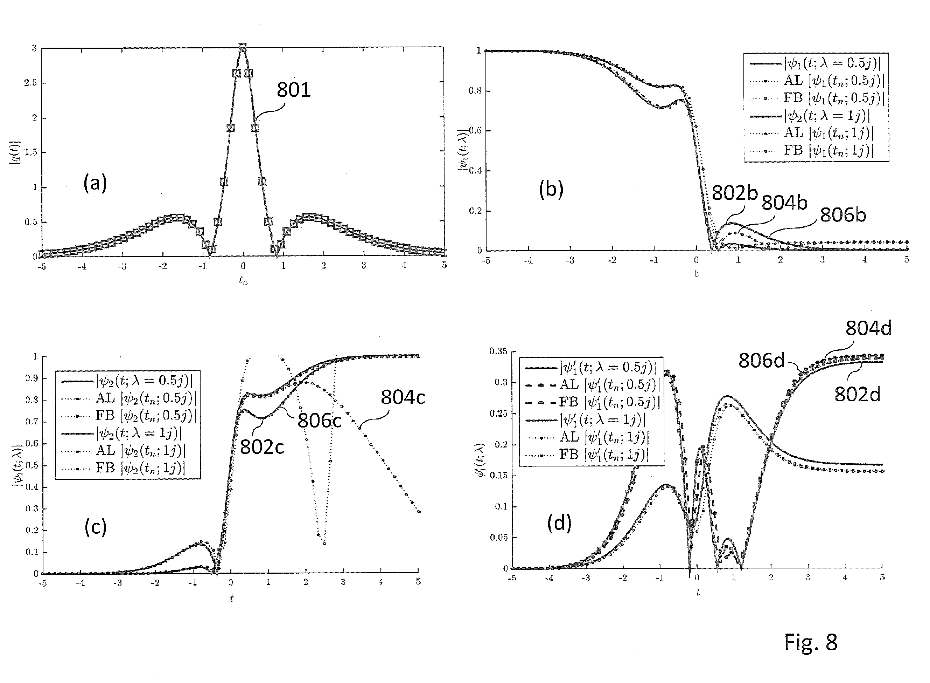

In a preferred embodiment, the at least one received waveform comprises a 2-solitonic pulse. The 2-solitonic pulse with eigenvalues $\lambda_1 = 0.5j$ and $\lambda_2 = 1j$ and with $Q_d(\lambda_1) = 3$ and $Q_d(\lambda_2) = -6$ is considered. This received pulse $q(t)$ is symmetric and has only an imaginary component. The proposed method further comprises truncating the pulse outside the interval $t \in [-5,5]$ in which contains more than 99.9% of pulse energy. The pulse $q(t)$ therefore has a finite pulse width and its absolute value is plotted in Fig. 8(a) with $N = 64$ samples, as illustrated by curve 801. According to the embodiment, the truncated pulse is uniformly sampled by $N$ samples to be supplied to the proposed forward-backward algorithm (FB). Preferably, the first spectral matrix and the second spectral matrix are computed based on the Trapezoid Discretization (TD) method. It should be noted that the first spectral matrix and the second spectral matrix may also be computed based on other numerical NFT algorithms such as Crank-Nicolson algorithm (CN) and Ablowitz-Ladik discretization algorithm (AL).

**Table 1** shows the discrete spectral amplitudes (i.e. the spectral modulation function) $Q_d(\lambda_i)$ and the corresponding spectral coefficients $a(\lambda)$ computed by applying different algorithms in terms of *N*. In this example, the sample portion dividing ratio is chosen as c = 1/2 (i.e. = N/2). In other embodiments, the sample portion dividing ratio c can also be any arbitrary value, or be chosen based on equation (21). The results are compared for the different algorithms: AL, CN, TD and FB, where FB combines the proposed forward-backward algorithm with the Trapezoid Discretization method whereas AL, CN and TD merely apply their corresponding integration based methods alone (i.e. without the forward-backward algorithm). As shown in Table 1, the proposed forward-backward algorithm combining with TD method is much more precise and stable than the others. In particular, it approximates the discrete spectrum with an acceptable precision when *N* is as small as 32. This can be seen more clearly in **Fig. 8(b)-(d),** where the solution of temporal equation (10), $\psi(t; \lambda) = (\psi_1(t; \lambda), \psi_2(t; \lambda))$, is numerically computed using AL algorithm and the proposed FB algorithm from $N = 64$ samples of $q(t)$. It should be noted that parameters such as *c* and *N* are not limited to the value given herein and other possible values can also be assigned.

**Fig. 8(b)** shows the results of $\psi_1(t; \lambda)$, **Fig. 8(c)** shows the results of $\psi_2(t; \lambda)$ and Fig. 8(d) shows the results of

$$\psi'_1(t; \lambda) = \frac{d}{d\lambda} \psi_1(t; \lambda).$$ The exact solutions are obtained by letting $N = 10^6$ and represented by the solid curves (e.g. 802b, 802c and 802d for the eigenvalue $\lambda_1 = 0.5j$). The results of applying AL and FB algorithm at the eigenvalue $\lambda_1 = 0.5j$ are presented by curves 804 and 806, respectively. Comparing numerical estimations of $\psi(t_n)$ using FB with AL algorithm, one can see the estimations of the proposed FB algorithm closely follow the exact solutions for both eigenvalues, whereas the estimation of AL algorithm diverges from the exact solution when N is not large enough. For example, curves 806b, 806c and 806d show better approximation to curves 802b, 802c and 802d than curves 804b, 804c and 804d do. Although the results shown herein are related to a single pulse, it should be noted, however, that the proposed method can be applied also for a plurality of pulses.

As such, the proposed method employing the forward-backward algorithm provides an efficient way to compute the nonlinear spectrum of pulses with finite pulse width. The proposed "forward-backward method" is more accurate and more robust than other discretization algorithms. Moreover, it can be implemented in parallel which increases computation speed by a factor of 2 and the total computational complexity of the proposed method is $O(N)$ per eigenvalue.

In the present application, a more stable and numerically more precise algorithm is provided to an optical transmitter and an optical receiver of a nonlinear optical transmission system, in order to efficiently generate and detect solitary waveforms for desired nonlinear spectrum with improved accuracy. The proposed method enhances the efficiency for the INFT, which can be implemented, for example, in the future Nonlinear Frequency Division Multiplexing (NFDM) schemes which improve the signal-to-noise ratio (SNR) and/or spectral efficiency performance of optical transport systems while keeping the very-large-scale integration (VLSI) complexity low. In particular, the proposed method has lower complexity than the other algorithms to generate a waveform with desired nonlinear spectrum.

It is further appreciated that the proposed method has higher stability and higher accuracy in numerically computing the nonlinear spectrum from samples of a waveform than other discretization algorithms, especially when the sampling rate is low, showing an advantage of parallel implementation in hardware which can reduce the computation time. Advantageously, the proposed method is a good candidate for the future NFDM optical systems as it is simple, robust and sufficiently precise for NFT implementation.

It should be noted that the method features described above correspond to respective device features that may however not explicitly be described, for reasons of conciseness (and vice versa). The disclosure of the present document is considered to extend also to such corresponding device/method features.

It should be further noted that the description and drawings merely illustrate the principles of the proposed device. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

**Claims**

1. A method for generating a waveform *(q(t))* for transmission via a nonlinear channel, the waveform *(q(t))* being generated based on at least one spectral modulation function ($Q_d(\lambda_i)$) depending on at least one spectral value ($\lambda_i$), the method comprising:

   receiving (101) the at least one spectral modulation function ($Q_d(\lambda_i)$) and the at least one corresponding spectral value ($\lambda_i$);
   setting (304) an initial spectral condition ($B_i$) based on the at least one spectral modulation function ($Q_d(\lambda_i)$) and the at least one spectral value ($\lambda_i$);

   generating (305) at least one initial spectral function $(v_i^{(0)}, \rho_i^{(0)})$ based on the initial spectral condition ($B_i$);

   generating (504, 505) at least one spectral function $(v_k^{(i)}(t), \rho_k^{(i)}(t))$ based on the at least one initial spectral function $\left(v_i^{(0)}, \rho_i^{(0)}\right)$ and the at least one spectral value ($\lambda_i$); and

determining (402) the waveform (q(t)) based on the at least one spectral function $\left(v_k^{(i)}(t), \rho_k^{(i)}(t)\right)$.

2. The method of claim 1, wherein the initial spectral condition ($B_i$) is set based on a formula:

$$B_i = -\frac{Q_d(\lambda_i)}{\lambda_i - \lambda_i^*} \prod_{k=1, k \neq i}^{N} \frac{\lambda_i - \lambda_k}{\lambda_i - \lambda_k^*}, \, i = 1, 2, \ldots, N.$$

3. The method of claim 1, wherein generating (504, 505) the at least one spectral function $\left(v_k^{(i)}(t), \rho_k^{(i)}(t)\right)$ comprises recursively updating a current spectral function based on the at least one spectral value ($\lambda_i$) and a previously generated spectral function.

4. The method of claim 1, wherein determining (402) the waveform (q(t)) comprises recursively updating a current waveform based on a previously generated waveform, the at least one spectral function $\left(v_k^{(i)}(t), \rho_k^{(i)}(t)\right)$ and the at least one spectral value ($\lambda_i$).

5. The method of claim 3, wherein a plurality of spectral values ($\lambda_i$) are provided and the at least one spectral function $\left(v_k^{(i)}(t), \rho_k^{(i)}(t)\right)$ is updated recursively until each spectral value ($\lambda_i$) has been considered.

6. The method of claim 4, wherein a plurality of spectral values ($\lambda_i$) are provided and the waveform (q(t)) is updated recursively until each spectral value ($\lambda_i$) has been considered.

7. The method of any of claims 3-6, wherein updating the at least one spectral function $\left(v_k^{(i)}(t), \rho_k^{(i)}(t)\right)$ or the waveform (q(t)) is based on Darboux transform.

8. The method of any of the preceding claims, wherein the waveform (q(t)) comprises a solitary waveform.

9. The method of any of the preceding claims, wherein the waveform (q(t)) comprises a plurality of samples, further comprising updating recursively the waveform (q(t)) for the plurality of samples.

10. A method for detecting a waveform (R(t)) having a nonlinear spectrum received via a nonlinear channel, the method comprising:

   receiving the waveform (R(t)) from the nonlinear channel, the received waveform (R(t)) having associated at least one spectral modulation function ($Q_d(\lambda_i)$) of the nonlinear spectrum depending on at least one spectral value ($\lambda_i$);
   generating, by sampling the received waveform (R(t)), a plurality of samples of the received waveform (R(t));
   dividing the plurality of samples of the received waveform (R(t)) into a first sample portion and a second sample portion;
   computing a first spectral matrix (($L_{11}, L_{21}$)) in a forward sample direction for the first sample portion of the received waveform (R(t));
   computing a second spectral matrix (($-R_{12}, R_{11}$)) in a backward sample direction for the second sample portion of the received waveform (R(t)); and
   obtaining, based on the first spectral matrix (($L_{11}, L_{21}$)) and the second spectral matrix (($-R_{12}, R_{11}$)), the at least one spectral modulation function $Q_d(\lambda_i)$ for the received waveform (R(t)).

11. The method of claim 10, wherein the first spectral matrix (($L_{11}, L_{21}$)) and the second spectral matrix (($-R_{12}, R_{11}$)) are computed based on a trapezoid discretization method.

12. The method of claim 10 or 11, wherein dividing the plurality of samples of the received waveform (R(t)) into the first sample portion and the second sample portion is based on a sample portion dividing ratio (c), wherein the sample portion dividing ratio is chosen as $c = 1/2$ or preferably, based on formula:

$$c = \arg \min_{t=T_0(2c-1)} |q(t)| \exp(2\eta|t|),$$

where $T_0$ represents one half of a pulse width of the received waveform and $\eta$ represents an imaginary part of the at least one spectral value.

13. The method of any of claims 10-12, wherein the steps of dividing the plurality of samples and computing the first spectral matrix $((L_{11}, L_{21}))$ and the second spectral matrix $((-R_{12}, R_{11}))$ are repeated until each of the at least one spectral value ($\lambda_i$) has been considered.

14. A transmitter (101) configured to generate a waveform ($q(t)$) for transmission via a nonlinear channel, the waveform ($q(t)$) being generated based on at least one spectral modulation function ($Q_d(\lambda_i)$) depending on at least one spectral value ($\lambda_i$), the transmitter (101) comprising:

an encoder configured to encode data onto the at least one spectral modulation function ($Q_d(\lambda_i)$); and
a processor coupled with the encoder, configured to:

receive, from the encoder, the at least one spectral modulation function ($Q_d(\lambda_i)$) encoded with the data and the at least one corresponding spectral value ($\lambda_i$);
set at least one initial spectral condition ($B_i$) based on the at least one spectral modulation function ($Q_d(\lambda_i)$) and the at least one spectral value ($\lambda_i$);
generate at least one initial spectral function $\left(v_i^{(0)}, \rho_i^{(0)}\right)$ based on the at least one initial spectral condition ($B_i$);
generate at least one spectral function $\left(v_k^{(i)}(t), \rho_k^{(i)}(t)\right)$ based on the at least one initial spectral function $\left(v_i^{(0)}, \rho_i^{(0)}\right)$ and the at least one spectral value ($\lambda_i$); and
determine the waveform ($q(t)$) based on the at least one spectral function $\left(v_k^{(i)}(t), \rho_k^{(i)}(t)\right)$.

15. A receiver (104) configured to detect a waveform (R(t)) having a nonlinear spectrum received via a nonlinear channel, the receiver (104) comprising a processor, the received waveform ($R(t)$) having associated at least one spectral modulation function ($Q_d(\lambda_i)$) of the nonlinear spectrum depending on at least one spectral value ($\lambda_i$), the processor configured to:

generate, by sampling the received waveform ($R(t)$), a plurality of samples of the received waveform ($R(t)$);
divide the plurality of samples of the received waveform ($R(t)$) into a first sample portion and a second sample portion;
compute a first spectral matrix $((L_{11}, L_{21}))$ in a forward sample direction during the first sample portion of the received waveform ($R$(t));
compute a second spectral matrix $((-R_{12}\, R_{11}))$ in a backward sample direction during the second sample portion of the received waveform ($R(t)$); and
obtain, based on the first spectral matrix $((L_{11}, L_{21}))$ and the second spectral matrix $((-R_{12}, R_{11}))$, the at least one spectral modulation function ($Q_d(\lambda_i)$) for the received waveform ($R(t)$),
the receiver (104) further comprising a decoder to decode data from the obtained at least one spectral modulation function ($Q_d(\lambda_i)$) for the received waveform ($R(t)$).

Fig. 1

Fig. 1(c)

EP 3 163 771 A1

103

Fig. 1(d)

EP 3 163 771 A1

## INVERSE NONLINEAR FOURIER TRANSFORM

200

**START** — 201

Give N discrete spectrum $(\lambda_i, Q_d(\lambda_i))$ M signal samples at $(t_1, t_2, \ldots, t_M)$ — 202

(1)

Initializations $i=0$ — 203

208

207

**END**

Output $q(t_m)$ $m=1,2,\ldots,M$

NO

$i=i+1,$ $i \leq N?$ — 204

YES

205

(2)

UPDATE $q(t_m)$ $m=1,2,\ldots,M$

206

(3)

UPDATE $v_k(t_m)$ $k=i+1,\ldots,N$ $m=1,2,\ldots,M$

Fig. 2

EP 3 163 771 A1

## INITIALIZATIONS (1)

300

START — 301

i=0 — 302

303 — $i=i+1,$ $i \leq N?$

NO — 306 Output $q(t_m)=0$ $v_{i,1}(t_m)$, $v_{i,2}(t_m)$ $m=1,2,...,M$

307 — END

YES

304 — $B_i = -c_i \dfrac{Q_d(\lambda_i)}{\lambda_i - \lambda_i^*} \prod_{k=1,k \neq i}^{N} \dfrac{\lambda_i - \lambda_k}{\lambda_i - \lambda_k^*}$

305 — $v_{i,1}(t_m)=c_i \exp(-j\lambda_i t_m)$ $v_{i,2}(t_m) =B_i \exp(j\lambda_i t_m)$ $m=1,2,...,M$ $j = \sqrt{-1}$

Fig. 3

## SIGNAL UPDATE (2)

400

**START** — 401

Output

$$q(t_m) = q(t_m) - 2j(\lambda_i - \lambda_i^*)\frac{v_{i,2}^*(t_m)v_{i,1}(t_m)}{\left|v_{i,1}(t_m)\right|^2 + \left|v_{i,2}(t_m)\right|^2}$$

$$m=1,2,...,M$$

402

**END** — 403

Fig. 4

## SPECTRAL FUNCTION UPDATE (3)

500

501 — START

502
$$\psi_1(t_m)=v_{i,1}(t_m)$$
$$\psi_2(t_m)=v_{i,2}(t_m)$$
$$m=1,2,...,M$$

503 — $k=k+1,\ k\leq N?$

505
$$v_{k,1}(t_m)=u_1(t_m)$$
$$v_{k,2}(t_m)=u_2(t_m)$$
$$m=1,2,...,M$$

YES →

504
$$u_1(t_m) = \left( \lambda_k - \lambda_i - \frac{(\lambda_i - \lambda_i^*)|\psi_1(t_m)|^2}{|\psi_1(t_m)|^2 + |\psi_2(t_m)|^2} \right) v_{k,1}(t_m) - \frac{(\lambda_i - \lambda_i^*)\psi_2^*(t_m)\psi_1(t_m)}{|\psi_1(t_m)|^2 + |\psi_2(t_m)|^2} v_{k,2}(t_m)$$
$$u_2(t_m) = \left( \lambda_k - \lambda_i - \frac{(\lambda_i - \lambda_i^*)|\psi_1(t_m)|^2}{|\psi_1(t_m)|^2 + |\psi_2(t_m)|^2} \right) v_{k,2}(t_m) - \frac{(\lambda_i - \lambda_i^*)\psi_1^*(t_m)\psi_2(t_m)}{|\psi_1(t_m)|^2 + |\psi_2(t_m)|^2} v_{k,1}(t_m)$$
$$m=1,2,...,M$$

NO ↓

506
Output
$$v_{k,1}(t_m),\ v_{k,2}(t_m)$$
$$k=i+1,...,N$$
$$m=1,2,...,M$$

507 — END

Fig. 5

600

```
┌─────────────────────────────────┐
│ receiving the at least one      │
│ waveform from the nonlinear     │ ⟍ 601
│ channel                         │
└─────────────────────────────────┘
              ↓
┌─────────────────────────────────┐
│ generating a plurality of       │
│ samples of the at least one     │ ⟍ 602
│ received wave form              │
└─────────────────────────────────┘
              ↓
┌─────────────────────────────────┐
│ dividing the plurality of       │
│ samples of the at least one     │
│ received wave form into a       │
│ first sample portion and a      │
│ second sample portion           │
└─────────────────────────────────┘
  603 ⟍
              ↓
┌─────────────────────────────────┐
│ computing a first spectral      │
│ matrix in a forward sample      │
│ direction during the first      │
│ sample portion                  │
└─────────────────────────────────┘
  604 ⟍
              ↓
┌─────────────────────────────────┐
│ computing a second spectral     │
│ matrix in a backward sample     │
│ direction during the second     │
│ sample portion                  │
└─────────────────────────────────┘
  605 ⟍
              ↓
┌─────────────────────────────────┐
│ obtaining the at least one      │
│ spectral modulation function    │
│ based on the first spectral     │
│ matrix and the second spectral  │
│ matrix                          │
└─────────────────────────────────┘
  606 ⟍
```

Fig. 6

(a)

704

702

701

703

$x(t) = \exp(t^2/2)$
Method in Example 1
Forward (Euler) method
Crank-Nicolson method (mid-point method)

time samples, $t$

$x(t)$

(b)

706

705

708

707

$x(t) = exp(\int sech(t)dt)$
Method in Example 1
Forward (Euler) method
Crank-Nicolson method (mid-point method)

$X(t)$

time sample, $t$

Fig. 7

EP 3 163 771 A1

Fig. 8

| Table 1: The discrete spectral amplitudes of a 2-solitonic pulse from different algorithms in terms of $N$. | | | | | | | | | | | | |
|---|---|---|---|---|---|---|---|---|---|---|---|---|
| Spectrum | $N=32$ | | | | $N=64$ | | | | $N=1024$ | | | |
| | AL | CN | TD | FB | AL | CN | TD | FB | AL | CN | TD | FB |
| $a(\lambda=0.5j)$ | 0.12 | 3.0e-2 | -1.3e-2 | -1.3e-2 | 4.0e-2 | 8.3e-3 | -3.2e-3 | -3.2e-3 | -9.9e-5 | -2.4e-4 | -2.8e-4 | -2.8e-4 |
| $Q_d(\lambda=0.5j)$ | -4.34 | 1.15 | 3.47 | 2.75 | 0.825 | 2.48 | 3.13 | 2.94 | 3.03 | 3.02 | 3.04 | 3.01 |
| $a(\lambda=1j)$ | 0.11 | 1.3e-2 | -2.9e-2 | -2.9e-2 | 3.4e-2 | 4.1e-3 | -6.9-3 | -6.9e-3 | 1.5e-4 | 1.6e-5 | -2.8e-5 | -2.8e-5 |
| $Q_d(\lambda=1j)$ | 819.3 | 78.57 | -197 | -7.58 | 189.4 | 15.46 | -42.3 | -6.29 | -5.32 | -5.91 | -6.13 | -5.99 |

Fig. 9: Table 1

**Algorithm 1:** Inverse Nonlinear Fourier Transform from Darboux Transform

**Input**  : $N$ Discrete spectral values $(\lambda_i, Q_d(\lambda_i))$ for $i = 1, \ldots, N$.

**Output**: Construct $N-$solitary waveform $q(t)$ from given discrete spectrum.

**begin**

/* initialization                                                                                                          */

**for** $i \leftarrow 1$ **to** $N$ **do**

$\quad A_i \leftarrow 1;$

$\quad B_i \leftarrow -\frac{Q_d(\lambda_i)}{\lambda_i - \lambda_i^*} \prod_{k=1, k \neq i}^{N} \frac{\lambda_i - \lambda_k}{\lambda_i - \lambda_k^*};$

$\quad v_i^{(0)}(t) \leftarrow (A_i e^{-j\lambda_i t}, B_i e^{j\lambda_i t})^T;$

**end**

$q^{(0)} \leftarrow 0;$

/* recursively add $(\lambda_i, Q_d(\lambda_i))$ to $q^{(i-1)}(t)$                                                          */

**for** $i \leftarrow 1$ **to** $N$ **do**

$\quad (\psi_1, \psi_2) \leftarrow v_i^{(i-1)}(t);$

$\quad q^{(k)}(t) \leftarrow q^{(i-1)}(t) - 2j(\lambda_i - \lambda_i^*)\frac{\psi_2^*(t)\psi_1(t)}{|\psi_1(t)|^2 + |\psi_2(t)|^2};$ /* signal update          */

$\quad$ **for** $k \leftarrow i + 1$ **to** $N$ **do**

$\quad\quad v_{k,1}^{(i)}(t) \leftarrow \left(\lambda_k - \lambda_i^* - \frac{(\lambda_i - \lambda_i^*)|\psi_1(t)|^2}{|\psi_1(t)|^2 + |\psi_2(t)|^2}\right) v_{k,1}^{(i-1)}(t) - \frac{(\lambda_i - \lambda_i^*)\psi_2^*(t)\psi_1(t)}{|\psi_1(t)|^2 + |\psi_2(t)|^2} v_{k,2}^{(i-1)}(t);$

$\quad\quad v_{k,2}^{(i)}(t) \leftarrow -\frac{(\lambda_i - \lambda_i^*)\psi_2(t)\psi_1^*(t)}{|\psi_1(t)|^2 + |\psi_2(t)|^2} v_{k,1}^{(i-1)}(t) + \left(\lambda_k - \lambda_i + \frac{(\lambda_i - \lambda_i^*)|\psi_1(t)|^2}{|\psi_1(t)|^2 + |\psi_2(t)|^2}\right) v_{k,2}^{(i-1)}(t);$

$\quad\quad v_k^{(i)}(t) \leftarrow \left(v_{k,1}^{(i)}(t), v_{k,2}^{(i)}(t)\right);$

$\quad$ **end**

**end**

**end**

Fig. 10

**Algorithm 2:** Inverse Nonlinear Fourier Transform from Darboux Transform

**Input** : $N$ Discrete spectral values $(\lambda_i, Q_d(\lambda_i))$ for $i = 1, \ldots, N$.

**Output**: Construct $N-$solitary waveform $q(t)$ from given discrete spectrum.

**begin**

    /* initialization                                                      */

    **for** $i \leftarrow 1$ **to** $N$ **do**

$$\rho_i^{(0)}(t) \longleftarrow \left( \frac{Q_d(\lambda_i)}{\lambda_i - \lambda_i^*} \prod_{k=1, k \neq i}^{N} \frac{\lambda_i - \lambda_k}{\lambda_i - \lambda_k^*} \right) e^{2j\lambda_i t};$$

    **end**

$$q^{(0)} \longleftarrow 0;$$

    /* recursively add $(\lambda_k, Q_d(\lambda_k))$ to $q^{(k-1)}(t)$                    */

    **for** $i \leftarrow 1$ **to** $N$ **do**

$$\rho(t) \longleftarrow \rho_i^{(i-1)}(t);$$

$$q^{(i)}(t) \longleftarrow q^{(i-1)}(t) + 2j(\lambda_i - \lambda_i^*)\frac{\rho^*(t)}{1+|\rho(t)|^2};\ /* \text{ signal update} \qquad */$$

        **for** $k \leftarrow i+1$ **to** $N$ **do**

$$\rho_k^{(i)}(t) \longleftarrow \frac{(\lambda_k - \lambda_i)\rho_k^{(i-1)}(t) + \frac{\lambda_i - \lambda_i^*}{1+|\rho(t)|^2}\left(\rho_k^{(i-1)}(t) - \rho(t)\right)}{\lambda_k - \lambda_i^* - \frac{\lambda_i - \lambda_i^*}{1+|\rho(t)|^2}\left(1 + \rho^*(t)\rho_k^{(i-1)}(t)\right)};$$

        **end**

    **end**

**end**

Fig. 11

EP 3 163 771 A1

Europäisches
Patentamt

European
Patent Office

Office européen
des brevets

# EUROPEAN SEARCH REPORT

**Application Number**

EP 15 30 6711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HARI SIDDARTH ET AL: "Multi-eigenvalue communication via the nonlinear Fourier transform", 2014 27TH BIENNIAL SYMPOSIUM ON COMMUNICATIONS (QBSC), IEEE, 1 June 2014 (2014-06-01), pages 92-95, XP032610186, DOI: 10.1109/QBSC.2014.6841191 [retrieved on 2014-06-20] | 1,3-9,14 | INV. H04B10/2507 H04L27/26 |
| A | * sections I-III; figure 1 * | 2,10-13, 15 | |
| X | YOUSEFI MANSOOR I ET AL: "Information Transmission Using the Nonlinear Fourier Transform, Part I: Mathematical Tools", IEEE TRANSACTIONS ON INFORMATION THEORY, IEEE PRESS, USA, vol. 60, no. 7, 1 July 2014 (2014-07-01), pages 4312-4328, XP011550436, ISSN: 0018-9448, DOI: 10.1109/TIT.2014.2321143 [retrieved on 2014-06-12] | 1,3-9,14 | |
| | | | **TECHNICAL FIELDS SEARCHED (IPC)** |
| A | * sections VI, VII; figure 5 * | 2,10-13, 15 | H04B H04L |
| A,D | AREF VAHID ET AL: "Experimental demonstration of nonlinear frequency division multiplexed transmission", 2015 EUROPEAN CONFERENCE ON OPTICAL COMMUNICATION (ECOC), VIAJES EL CORTE INGLES, VECISA, 27 September 2015 (2015-09-27), pages 1-3, XP032820205, DOI: 10.1109/ECOC.2015.7341903 [retrieved on 2015-11-30] * the whole document * | 1-15 | |

The present search report has been drawn up for all claims

| Place of search | Date of completion of the search | Examiner |
|---|---|---|
| The Hague | 23 March 2016 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. AREF.** Experimental Demonstration of Nonlinear Frequency Division Multiplexed Transmission. *ECOC,* 2015
- **H. BÜLOW.** Experimental Demonstration of Optical Signal Detection Using Nonlinear Fourier Transform. *JLT,* 2015, vol. 33 (7
- **M. I. YOUSEFI.** Information transmission using the nonlinear Fourier transform. *Ph.D. dissertation,* 2013

- **J. LIN.** Evolution of the scattering data under the classical darboux transform for su(2) soliton systems. *Acta Mathematicae Applicatae Sinica,* 1990, vol. 6 (4), 308-316
- **M. I. YOUSEFI.** Information transmission using the nonlinear Fourier transform. *Ph.D. dissertation, University of Toronto,* 2013